# FASCICULE DE BREVET EUROPEEN

(11) **EP 3 371 801 B1**
(45) Date de publication et mention de la délivrance du brevet: **26.02.2020**
(21) Numéro de dépôt: 16788081.4
(22) Date de dépôt: 26.10.2016
(51) Int. Cl.: G09B 23/28, G09B 23/30

(54) **SIMULATEUR MÉDICO-CHIRURGICAL ET PROCÉDÉ DE SIMULATION MÉDICO-CHIRURGICALE**
MEDIZINISCH-CHIRURGISCHER SIMULATOR UND MEDIZINISCH-CHIRURGISCHES SIMULATIONSVERFAHREN
MEDICO-SURGICAL SIMULATOR AND MEDICO-SURGICAL SIMULATION METHOD

(30) Priorité: 02.11.2015 FR 1560488
(43) Date de publication de la demande: 12.09.2018
(73) Titulaire: Centre National de la Recherche Scientifique, 75016 Paris (FR); Universite De Poitiers, 86000 Poitiers (FR); Centre Hospitalier Universitaire de Poitiers, 86000 Poitiers (FR); INSERM - Institut National de la Santé et de la Recherche Médicale, 75013 Paris (FR)
(72) Inventeur: RICHER, Jean-Pierre, 86600 Lusignan (FR); FAURE, Jean-Pierre, 86550 Mignaloux-Beauvoir (FR); ORIOT, Denis, 86000 Poitiers (FR); BREQUE, Cyril, 86000 Poitiers (FR); DELPECH, Pierre Olivier, 86000 Poitiers (FR); GHAZALI, Daniel-Aïham, 75015 Paris (FR)
(74) Mandataire: IPAZ
(86) Numéro de dépôt international: PCT/EP2016/075819
(87) Numéro de publication internationale: WO 2017/076717

(56) Documents cités:
- WO-A2-2008/039979
- US-A1- 2003 186 203
- US-A1- 2004 033 477

## Description

### Domaine technique

La présente invention se rapporte au domaine des simulateurs médico-chirurgicaux.

La présente invention concerne plus spécifiquement un simulateur médico-chirurgical à très haut degré de réalisme et un procédé s'y rapportant.

### Etat de la technique antérieure

Les simulateurs médico-chirurgicaux ont pour objet de placer des chirurgiens en situation de bloc opératoire et de les confronter à des procédures chirurgicales complexes qu'ils sont susceptibles de rencontrer dans leur pratique.

Compte-tenu des contraintes croissantes de rentabilité dans le domaine de la formation à la chirurgie, la formation pratique des chirurgiens traditionnellement réalisée en compagnonnage sous la supervision d'un chirurgien expérimenté en situation de bloc opératoire est de moins en moins applicable, un tel compagnonnage étant particulièrement chronophage et donc coûteux. C'est pourquoi, depuis quelques années, sont apparus des centres de simulation médico-chirurgicale mettant en œuvre des dispositifs de type mannequin en plastique à très haute fidélité ou de type console numérique robotisée. La formation à la chirurgie dans de tels centres s'avère toutefois insuffisante et le coût d'utilisation et de maintenance de tels dispositifs reste très élevé. D'autres centres de simulation médico-chirurgicale mettent en œuvre des modèles porcins. Toutefois, la répétition de gestes chirurgicaux en situation clinique ou quasi-clinique est incontournable dans la formation initiale et continue des chirurgiens. De plus, l'expérimentation animale pourrait bientôt être totalement interdite aux Etats-Unis et potentiellement dans d'autres Etats du monde.

On connaît dans l'état de la technique antérieure des méthodes de simulation médico-chirurgicale consistant à vasculariser un cadavre humain, ce qui permet d'augmenter le réalisme de la simulation. De telles méthodes sont en particulier divulguées dans les documents suivants :
- Novel simulation for training trauma surgeons, Aboud, Krisht, O'Keeffe, Nader, Hassan, Stevens, Ali, Luchette, Journal of traumatology 2011 Dec, 71(6):1487-90 (ci-après Aboud 2011) ;
- US 6,824,389 B1.

Néanmoins, de telles méthodes de vascularisation de cadavre humain sont encore insatisfaisantes en termes de réalisme et/ou de coût au moins pour les raisons suivantes :
- Elles mettent en œuvre des techniques de simulation relativement sommaires, telles que des ballonnets intra-aortiques ou des réservoirs de perfusion ;
- Le liquide injecté dans le système veineux et artériel du cadavre est généralement injecté à pression et pulsation constantes ;
- Une injection d'héparine sodique est réalisée en fin de processus de lavage du système veineux et artériel du tronc du cadavre humain afin d'éliminer tous les résidus sanguins ;
- Les scénarii chirurgicaux sont supervisés manuellement par un opérateur humain ;
- La vascularisation d'un cadavre humain ne permet pas de reproduire les gênes qui seraient occasionnées par le fonctionnement de l'organisme d'un corps vivant, en particulier lors d'une chirurgie du tronc.

Un but de l'invention est de proposer un simulateur médico-chirurgical à très haut degré de réalisme et répondant aux besoins croissants de formation à la chirurgie dans un contexte de réduction des budgets alloués à une telle formation.

### Exposé de l'invention

A cet effet, l'invention propose un simulateur médico-chirurgical comprenant :
- un dispositif de vascularisation agencé pour vasculariser un circuit cardiovasculaire, le dispositif de vascularisation comprenant :
   ∘ des moyens de connexion agencés pour connecter le dispositif de vascularisation à un cœur d'un cadavre (de préférence humain) de sorte que ce cœur fasse partie du circuit cardiovasculaire,
   ∘ un système d'injection de liquide agencé pour injecter un liquide dans le circuit cardiovasculaire et pour régler au moins un paramètre d'injection du liquide dans le circuit cardiovasculaire, le liquide ayant de préférence une couleur, une température, une texture et/ou une viscosité comparable à celle d'un sang standard,
   ∘ un système de mesure de liquide agencé pour mesurer au moins un paramètre représentatif d'un flux de liquide dans le circuit cardiovasculaire,
   et/ou
- un dispositif de ventilation agencé pour ventiler un circuit respiratoire, le dispositif de ventilation comprenant :
   ∘ des moyens de connexion agencés pour connecter le dispositif de ventilation à des poumons du cadavre de sorte que ces poumons fassent partie du circuit respiratoire,
   ∘ un système d'injection de gaz agencé pour injecter un gaz dans le circuit respiratoire et pour régler au moins un paramètre d'injection du gaz dans le circuit respiratoire, le gaz étant de préférence de l'air,
   ∘ un système de mesure de gaz agencé pour mesurer au moins un paramètre représentatif d'un flux du gaz dans le circuit respiratoire,
le simulateur médico-chirurgical comprenant en outre un dispositif de régulation agencé pour :
- lire au moins un paramètre d'entrée, l'au moins un paramètre d'entrée comprenant :
   ∘ un ou plusieurs paramètres parmi l'au moins un paramètre mesuré par le système de mesure de liquide et/ou par le système de mesure de gaz, et/ou
   ∘ un ou plusieurs paramètres parmi l'au moins un paramètre d'injection du liquide et/ou l'au moins un paramètre d'injection du gaz,
- régler, via le système d'injection de liquide et/ou le système d'injection de gaz, au moins un paramètre de sortie en fonction de l'au moins un paramètre d'entrée, l'au moins un paramètre de sortie comprenant un ou plusieurs paramètres parmi l'au moins un paramètre d'injection du liquide et/ou l'au moins un paramètre d'injection du gaz, l'au moins un paramètre de sortie étant différent de l'au moins un paramètre d'entrée.

Un tel simulateur médico-chirurgical possède un très haut degré de réalisme car il permet de simuler les fonctions cardiovasculaires et/ou respiratoires d'un corps.

De préférence, le simulateur médico-chirurgical peut comprendre le dispositif de vascularisation et le dispositif de ventilation.

L'au moins un paramètre d'injection du liquide peut comprendre une pression et/ou un débit et/ou une fréquence d'injection du liquide dans le circuit cardiovasculaire.

Dans un mode de réalisation, le système d'injection de liquide peut comprendre :
- une ou plusieurs électrovannes d'injection agencées pour régler le débit et/ou la fréquence d'injection du liquide dans le circuit cardiovasculaire, et/ou
- un régulateur de pression de liquide agencé pour régler la pression d'injection du liquide dans le circuit cardiovasculaire.

L'au moins un paramètre représentatif d'un flux du liquide dans le circuit cardiovasculaire peut comprendre un débit du liquide dans le circuit cardiovasculaire.

Dans un mode de réalisation, le système de mesure de liquide peut comprendre un ou plusieurs débitmètres agencés pour mesurer le débit du liquide dans le circuit cardiovasculaire.

Le système de mesure de liquide peut comprendre en outre un capteur de pression intracardiaque agencé pour mesurer une pression intracardiaque du liquide dans le cœur, cette pression intracardiaque constituant un paramètre représentatif du flux du liquide dans le circuit cardiovasculaire.

L'au moins un paramètre d'injection du gaz peut comprendre une pression et/ou un débit et/ou une fréquence d'injection du gaz dans le circuit respiratoire.

Dans un mode de réalisation, le système d'injection de gaz peut comprendre :
- un distributeur pneumatique agencé pour régler le débit et/ou la fréquence d'injection du gaz dans le circuit respiratoire, et/ou
- un régulateur de pression de gaz agencé pour régler la pression d'injection du gaz dans le circuit respiratoire.

L'au moins un paramètre représentatif d'un flux du gaz dans le circuit respiratoire peut comprendre un débit du gaz dans le circuit respiratoire.

Dans un mode de réalisation, le système de mesure de gaz peut comprendre un débitmètre pneumatique agencé pour mesurer le débit du gaz dans le circuit respiratoire.

Suivant une variante de l'invention, le dispositif de régulation peut comprendre des moyens pour entrer manuellement un ou plusieurs paramètres parmi l'au moins un paramètre d'injection du liquide et/ou l'au moins un paramètre d'injection du gaz en tant que paramètre d'entrée.

Suivant une autre variante de l'invention, compatible avec les autres variantes ou modes de réalisation, le dispositif de régulation peut comprendre une mémoire informatique dans laquelle sont enregistrés un ou plusieurs modèles parmi :
- Un modèle cardiaque-respiratoire dans lequel le dispositif de régulation lit comme paramètre(s) d'entrée un ou plusieurs parmi l'au moins un paramètre d'injection du liquide et règle comme paramètre(s) de sortie, via le système d'injection de gaz, un ou plusieurs parmi l'au moins un paramètre d'injection du gaz en fonction de ce(s) paramètre(s) d'entrée ;
- Un modèle respiratoire-cardiaque dans lequel le dispositif de régulation lit comme paramètre(s) d'entrée un ou plusieurs parmi l'au moins un paramètre d'injection du gaz et règle comme paramètre(s) de sortie, via le système d'injection de liquide, un ou plusieurs parmi l'au moins un paramètre d'injection du liquide en fonction de ce(s) paramètre(s) d'entrée ;
- Un modèle cardiaque-cardiaque dans le dispositif de régulation lit comme paramètre(s) d'entrée un ou plusieurs parmi l'au moins un paramètre d'injection du liquide et règle comme paramètre(s) de sortie, via le système d'injection de liquide, un ou plusieurs parmi l'au moins un paramètre d'injection du liquide en fonction de ce(s) paramètre(s) d'entrée, ce(s) paramètre(s) de sortie étant différent de ce(s) paramètre(s) d'entrée ;
- Un modèle respiratoire-respiratoire dans le dispositif de régulation lit comme paramètre(s) d'entrée un ou plusieurs parmi l'au moins un paramètre d'injection du gaz et règle comme paramètre(s) de sortie, via le système d'injection de gaz, un ou plusieurs parmi l'au moins un paramètre d'injection du gaz en fonction de ce(s) paramètre(s) d'entrée, ce(s) paramètre(s) de sortie étant différent de ce(s) paramètre(s) d'entrée.

De préférence, une augmentation du ou des paramètres d'entrée entraîne une augmentation du ou des paramètres de sortie, et une diminution du ou des paramètres d'entrée entraîne une diminution du ou des paramètres de sortie.

Le réglage du ou des paramètres de sortie est de préférence une fonction linéaire, ou parabolique ou polynomiale du ou des paramètres d'entrée. Une fonction linéaire présente l'avantage de la simplicité. Une fonction polynomiale présente l'avantage de simuler les fonctions physiologiques avec plus de réalisme que la fonction linéaire ou parabolique.

De préférence, la mémoire informatique comprend plusieurs scénarii enregistrés, chaque scénario correspondant à une combinaison, spécifique à ce scénario, de plusieurs modèles.

De tels scénarii permettent de simuler des situations susceptibles d'être rencontrées en bloc opératoire.

Dans un mode de réalisation, le dispositif de vascularisation peut comprendre en outre trois conduits et en ce que les moyens de connexion du dispositif de vascularisation comprennent trois canules reliées respectivement à ces trois conduits, ces canules et conduits étant agencés pour connecter le dispositif de vascularisation, par les canules, à trois artères respectives du cadavre formant un réseau artériel de manière à permettre une injection du liquide dans ce réseau artériel par l'une au moins de ces canules.

Dans un tel mode de réalisation, le dispositif de vascularisation peut comprendre en outre :
- trois mécanismes de circulation montés respectivement sur chacun des trois conduits, le mécanisme de circulation associé à chacun des conduits étant agencé pour prendre sélectivement deux positions :
   ∘ une position d'injection dans laquelle le liquide peut circuler dans le conduit au travers du mécanisme de circulation depuis le système d'injection de liquide vers le réseau artériel et dans laquelle le liquide ne peut pas circuler dans le conduit au travers du mécanisme de circulation depuis le réseau artériel vers le système d'injection de liquide,
   ∘ une position d'évacuation dans laquelle le liquide peut circuler dans le conduit au travers du mécanisme de circulation depuis le réseau artériel vers le système d'injection de liquide et dans laquelle le liquide ne peut pas circuler dans le conduit au travers du mécanisme de circulation depuis le système d'injection de liquide vers le réseau artériel,
- un sélecteur agencé pour sélectionner au moins deux modes d'injection de liquide parmi :
   ∘ un mode de mise en pression dans lequel les trois mécanismes de circulation sont placés dans la position d'injection,
   ∘ un mode de mise en circulation dans lequel un ou deux des mécanismes de circulation sont placés dans la position d'injection et dans lequel le ou les autres mécanismes de circulation sont placés dans la position d'évacuation.

Le mode de mise en pression permet de réaliser des économies de liquide injecté dans le réseau artériel, de revasculariser les organes ou les viscères du thorax et/ou de l'abdomen leur donnant une couleur, texture et température proche de la réalité et d'obtenir un débit, une pression, une turgescence du système veineux par exemple avant l'évacuation du liquide par des canules veineuses mises en place au niveau jugulaire et fémoral.

Le mode de mise en circulation permet d'évaluer la perméabilité de chaque artère et du circuit cardio-vasculaire du cadavre. Il permet aussi de rechercher le scénario ou la combinaison de modèles ou encore un réglage du ou des paramètres de sortie aussi adapté que possible. Le mode de mise en circulation permet aussi à l'apprenant de ressentir un écoulement de liquide dans le système vasculaire du cadavre (par exemple, gonflement de l'artère en dessous ou au-dessus d'un clampage mais pas de chaque côté, etc.).

Dans un mode de réalisation, les moyens de connexion du dispositif de ventilation peuvent être agencés pour connecter ce dispositif de ventilation à une trachée du cadavre de sorte que cette trachée fasse partie du circuit respiratoire, et en ce que le système d'injection de gaz comprend une sonde orotrachéale agencée pour injecter le gaz dans cette trachée.

La présente invention concerne aussi un procédé de simulation médico-chirurgicale comprenant :
- une étape de vascularisation dans laquelle un circuit cardiovasculaire est vascularisé par un dispositif de vascularisation, cette étape de vascularisation comprenant :
   ∘ une étape de connexion dans laquelle on connecte, par des moyens de connexion, le dispositif de vascularisation à un cœur d'un cadavre (de préférence humain) de sorte que ce cœur fasse partie du circuit cardiovasculaire,
   ∘ une étape d'injection de liquide dans laquelle on injecte, par un système d'injection de liquide, un liquide dans le circuit cardiovasculaire,
   ∘ une étape de réglage dans laquelle on règle, par le système d'injection de liquide, au moins un paramètre d'injection du liquide,
   ∘ de préférence une étape de mesure dans laquelle on mesure, par un système de mesure de liquide, au moins un paramètre représentatif d'un flux de liquide dans le circuit cardiovasculaire,
   et/ou
- une étape de ventilation dans laquelle un circuit respiratoire est ventilé par un dispositif de ventilation, cette étape de ventilation comprenant :
   ∘ une étape de connexion dans laquelle on connecte, par des moyens de connexion, le dispositif de ventilation à des poumons du cadavre de sorte que ces poumons fassent partie du circuit respiratoire,
   ∘ une étape d'injection de gaz dans laquelle on injecte, par un système d'injection de gaz, un gaz dans le circuit respiratoire,
   ∘ une étape de réglage dans laquelle on règle, par le système d'injection de gaz, au moins un paramètre d'injection du gaz,
   ∘ de préférence une étape de mesure dans laquelle on mesure, par système de mesure de gaz, au moins un paramètre représentatif d'un flux du gaz dans le circuit respiratoire,
le procédé de simulation médico-chirurgicale comprenant en outre une étape de régulation dans laquelle :
- un dispositif de régulation lit au moins un paramètre d'entrée, l'au moins un paramètre d'entrée comprenant :
   ∘ un ou plusieurs paramètres parmi l'au moins un paramètre mesuré par le système de mesure de liquide et/ou par le système de mesure de gaz, et/ou
   ∘ un ou plusieurs paramètres parmi l'au moins un paramètre d'injection du liquide et/ou l'au moins un paramètre d'injection du gaz,
- le dispositif de régulation règle, via le système d'injection de liquide et/ou le système d'injection de gaz, au moins un paramètre de sortie en fonction de l'au moins un paramètre d'entrée, l'au moins un paramètre de sortie comprenant un ou plusieurs paramètres parmi l'au moins un paramètre d'injection du liquide et/ou l'au moins un paramètre d'injection du gaz, l'au moins un paramètre de sortie étant différent de l'au moins un paramètre d'entrée.

De préférence, le procédé de simulation médico-chirurgicale peut comprendre l'étape de vascularisation et l'étape de ventilation.

L'au moins un paramètre d'injection du liquide peut comprendre une pression et/ou un débit et/ou une fréquence d'injection du liquide dans le circuit cardiovasculaire.

Dans un mode de mise en œuvre, l'étape d'injection de liquide peut comprendre :
- une étape de réglage, par une ou plusieurs électrovannes d'injection, du débit et/ou de la fréquence d'injection du liquide dans le circuit cardiovasculaire, et/ou
- une étape de réglage, par un régulateur de pression de liquide, de la pression d'injection du liquide dans le circuit cardiovasculaire.

L'au moins un paramètre représentatif d'un flux du liquide dans le circuit cardiovasculaire peut comprendre un débit du liquide dans le circuit cardiovasculaire.

Dans un mode de mise en œuvre, dans l'étape de vascularisation, l'étape de mesure peut comprendre une mesure, par un ou plusieurs débitmètres, du débit du liquide dans le circuit cardiovasculaire.

Dans l'étape de vascularisation, l'étape de mesure peut comprendre en outre une mesure, par un capteur de pression intracardiaque, d'une pression intracardiaque du liquide dans le cœur, cette pression intracardiaque constituant un paramètre représentatif du flux du liquide dans le circuit cardiovasculaire.

L'au moins un paramètre d'injection du gaz peut comprendre une pression et/ou un débit et/ou une fréquence d'injection du gaz dans le circuit respiratoire.

Dans un mode de mise en œuvre, l'étape d'injection de gaz peut comprendre :
- une étape de réglage, par un distributeur pneumatique, du débit et/ou de la fréquence d'injection du gaz dans le circuit respiratoire, et/ou
- une étape de réglage, par un régulateur de pression de gaz, de la pression d'injection du gaz dans le circuit respiratoire.

L'au moins un paramètre représentatif d'un flux du gaz dans le circuit respiratoire peut comprendre un débit du gaz dans le circuit respiratoire.

Dans l'étape de ventilation, l'étape de mesure peut comprendre une mesure, le système de mesure de gaz, du débit du gaz dans le circuit respiratoire.

Dans un mode de mise en œuvre, le procédé de simulation médico-chirurgicale peut comprendre une entrée manuelle d'un ou plusieurs paramètres parmi l'au moins un paramètre d'injection du liquide et/ou l'au moins un paramètre d'injection du gaz en tant que paramètre d'entrée, via une interface utilisateur.

L'étape de régulation peut comprendre une utilisation d'un ou plusieurs modèles enregistrés dans une mémoire informatique parmi :
- Un modèle cardiaque-respiratoire dans lequel le dispositif de régulation lit comme paramètre(s) d'entrée un ou plusieurs parmi l'au moins un paramètre d'injection du liquide et règle comme paramètre(s) de sortie, via le système d'injection de gaz, un ou plusieurs parmi l'au moins un paramètre d'injection du gaz en fonction de ce(s) paramètre(s) d'entrée ;
- Un modèle respiratoire-cardiaque dans lequel le dispositif de régulation lit comme paramètre(s) d'entrée un ou plusieurs parmi l'au moins un paramètre d'injection du gaz et règle comme paramètre(s) de sortie, via le système d'injection de liquide, un ou plusieurs parmi l'au moins un paramètre d'injection du liquide en fonction de ce(s) paramètre(s) d'entrée ;
- Un modèle cardiaque-cardiaque dans le dispositif de régulation lit comme paramètre(s) d'entrée un ou plusieurs parmi l'au moins un paramètre d'injection du liquide et règle comme paramètre(s) de sortie, via le système d'injection de liquide, un ou plusieurs parmi l'au moins un paramètre d'injection du liquide en fonction de ce(s) paramètre(s) d'entrée, ce(s) paramètre(s) de sortie étant différent de ce(s) paramètre(s) d'entrée ;
- Un modèle respiratoire-respiratoire dans le dispositif de régulation lit comme paramètre(s) d'entrée un ou plusieurs parmi l'au moins un paramètre d'injection du gaz et règle comme paramètre(s) de sortie, via le système d'injection de gaz, un ou plusieurs parmi l'au moins un paramètre d'injection du gaz en fonction de ce(s) paramètre(s) d'entrée, ce(s) paramètre(s) de sortie étant différent de ce(s) paramètre(s) d'entrée.

De préférence, le réglage du ou des paramètres de sortie est une fonction linéaire, ou parabolique ou polynomiale du ou des paramètres d'entrée.

La mémoire informatique peut comprendre plusieurs scénarii enregistrés, chaque scénario correspondant à une combinaison, spécifique à ce scénario, de plusieurs modèles.

Dans un mode de mise en œuvre, l'étape de vascularisation peut comprendre en outre une connexion du dispositif de vascularisation, par trois canules reliées respectivement à trois conduits du dispositif de vascularisation, à trois artères respectives du cadavre formant un réseau artériel de manière à permettre une injection du liquide dans ce réseau artériel par l'une au moins de ces canules.

L'étape de vascularisation peut comprendre en outre une étape de sélection, par un sélecteur, d'un mode d'injection de liquide parmi :
- un mode de mise en pression dans lequel trois mécanismes de circulation sont placés dans une position d'injection,
- un mode de mise en circulation dans lequel un ou deux des mécanismes de circulation sont placés dans la position d'injection et dans lequel le ou les autres mécanismes de circulation sont placés dans une position d'évacuation,
la position d'injection étant une position dans laquelle le liquide peut circuler dans un conduit donné au travers d'un mécanisme de circulation monté sur ce conduit depuis le système d'injection de liquide vers le réseau artériel et dans laquelle le liquide ne peut pas circuler dans le conduit au travers du mécanisme de circulation depuis le réseau artériel vers le système d'injection de liquide,
la position d'évacuation étant une position dans laquelle le liquide peut circuler dans un conduit donné au travers du mécanisme de circulation monté sur ce conduit depuis le réseau artériel vers le système d'injection de liquide et dans laquelle le liquide ne peut pas circuler dans le conduit au travers du mécanisme de circulation depuis le système d'injection de liquide vers le réseau artériel.

De préférence, dans l'étape de ventilation, l'étape de connexion comprend une connexion du dispositif de ventilation à une trachée du cadavre de sorte que cette trachée fasse partie du circuit respiratoire, et en ce que l'étape d'injection de gaz comprend une injection du gaz dans cette trachée via une sonde orotrachéale.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- la figure 1 illustre schématiquement un mode de réalisation du simulateur médico-chirurgical selon l'invention ;
- les figures 2 et 3 illustrent respectivement un circuit cardiovasculaire et un circuit respiratoire d'un cadavre humain auquel peut être connecté un simulateur médico-chirurgical selon l'invention.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

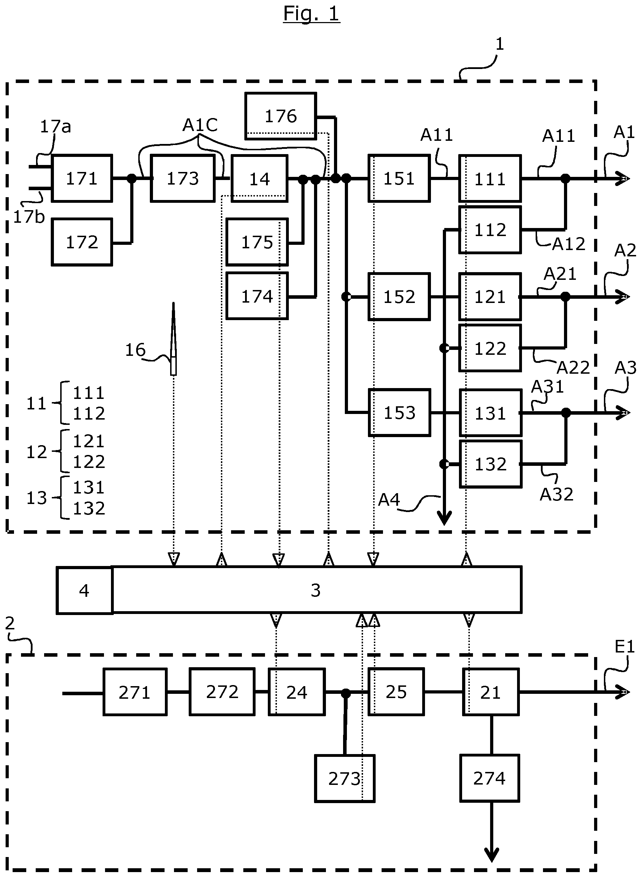

Un exemple de réalisation de simulateur médico-chirurgical selon l'invention est représenté en figure 1.

Dans cet exemple, le simulateur médico-chirurgical comprend un dispositif de vascularisation 1, un dispositif de ventilation 2 et un dispositif de régulation 3 qui pilote le dispositif de vascularisation 1 et le dispositif de ventilation 2.

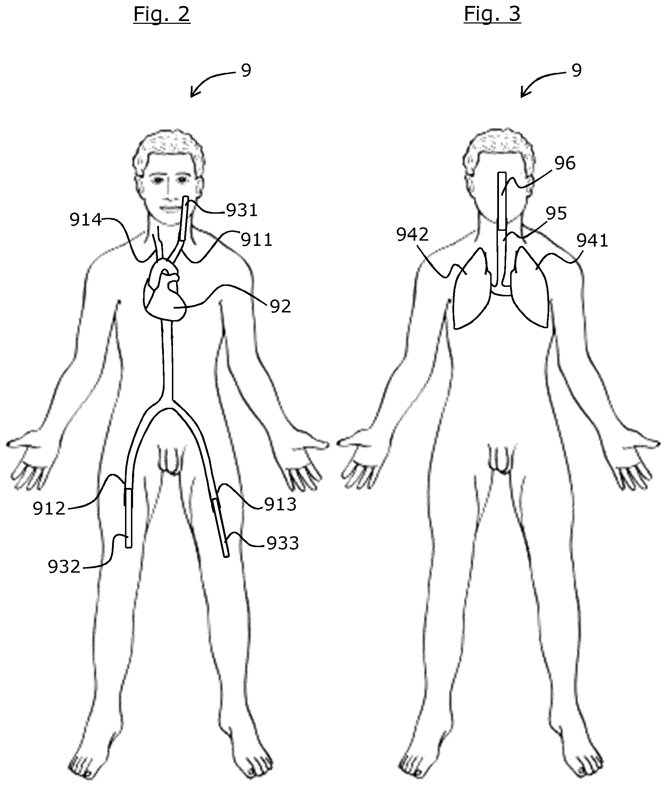

On voit en figure 1 que le dispositif de vascularisation 1 comprend trois voies A1, A2 et A3 représentées par des flèches dirigées vers la droite de la figure. Ces voies A1, A2 et A3 sont des conduits du dispositif de vascularisation 1 reliés respectivement à trois canules 931, 932 et 933 représentées en figure 2. Par exemple, le conduit A1 est relié à la canule 931, le conduit A2 est relié à la canule 932 et le conduit A3 est relié à la canule 933. Le lien entre ces conduits et canules, non représenté sur ces figures 1 et 2, peut être réalisé par tout moyen de liaison classique. Par exemple, ces conduits A1, A2 et A3 peuvent être des tuyaux ayant un diamètre intérieur de 10 mm, et les canules 931, 932 et 933 peuvent être des canules vasculaires insérés dans ces tuyaux et/ou fixés à ces tuyaux par tout moyen de fixation connu.

Dans l'exemple des figures 1 et 2, les canules 931, 932 et 933 et conduits A1, A2 et A3 sont agencés pour connecter le dispositif de vascularisation 1, par les canules, à trois artères 911, 912 et 913 respectives d'un cadavre humain 9. Les artères 911, 912 et 913 forment un réseau artériel, c'est-à-dire qu'elles sont reliées entre elles de sorte qu'un liquide qui serait injecté par l'une de ces artères, par exemple l'artère 911, pourrait circuler dans cette artère 911 et parcourir le réseau artériel de manière à circuler ensuite dans les artères 912 et 913. En particulier, l'agencement des canules 931, 932 et 933 et conduits A1, A2 et A3 permet une injection d'un liquide dans ce réseau artériel par l'une au moins de ces canules.

De préférence, l'artère 911 est l'artère carotide commune gauche du cadavre 9, l'artère 912 est l'artère fémorale droite du cadavre 9 et l'artère 913 est l'artère fémorale gauche du cadavre 9.

Le dispositif de vascularisation 1 comprend donc des moyens de connexion, ces moyens de connexion comportant les canules 931, 932 et 933, agencés pour connecter ce dispositif de vascularisation 1 à un cœur 92 du cadavre humain 9 de sorte que ce cœur fasse partie d'un circuit cardiovasculaire.

Concernant le dispositif de ventilation 2, on voit en figure 1 que celui-ci comprend une voie E1 représentée par une flèche dirigée vers la droite de la figure. Dans cet exemple, cette voie E1 est un conduit du dispositif de ventilation 2 relié à une sonde orotrachéale 96 représentée en figure 3.

Dans l'exemple des figures 1 et 3, le dispositif de ventilation 2 comprend des moyens de connexion, ces moyens de connexion comportant la sonde orotrachéale 96, agencés pour connecter le dispositif de ventilation 2 à des poumons 941 et 942 du cadavre humain 9 de sorte que ces poumons fassent partie d'un circuit respiratoire du dispositif de ventilation 2. En outre, dans cet exemple, les moyens de connexion du dispositif de ventilation 2 sont agencés pour connecter ce dispositif de ventilation 2 à une trachée 95 du cadavre humain 9 de sorte que cette trachée 95 fasse partie du circuit respiratoire.

On voit par conséquent que, selon l'invention :
- le dispositif de vascularisation 1 est agencé pour vasculariser un circuit cardiovasculaire, dans cet exemple les artères 911, 912 et 913 ainsi que le cœur 92 du cadavre humain 9 tel qu'illustré en figure 2 ;
- le dispositif de ventilation 2 est agencé pour ventiler un circuit respiratoire, dans cet exemple la trachée 95 ainsi que les poumons 941 et 942 du cadavre humain 9 tel qu'illustré en figure 3.

### Description du dispositif de vascularisation

Le dispositif de vascularisation 1 comprend un système d'injection de liquide agencé pour injecter un liquide dans le circuit cardiovasculaire et pour régler au moins un paramètre d'injection du liquide dans le circuit cardiovasculaire.

En référence à la figure 1, le système d'injection de liquide comprend trois électrovannes d'injection 111, 121 et 131. Ces électrovannes d'injection 111, 121 et 131 sont respectivement montées sur des conduits d'injection A11, A21 et A31 du dispositif de vascularisation 1. Les électrovannes d'injection 111, 121 et 131 sont agencées pour régler un débit et/ou une fréquence d'injection du liquide dans le circuit cardiovasculaire. Plus précisément, le conduit d'injection A11 est relié au conduit A1, le conduit d'injection A21 est relié au conduit A2 et le conduit d'injection A31 est relié au conduit A3, de sorte qu'une modification du réglage des électrovannes d'injection 111, 121 et 131 en termes de débit et/ou de fréquence d'injection se traduit par une modification du débit et/ou de la fréquence avec lequel le liquide est injecté dans le réseau artériel.

Les conduits d'injection A11, A21 et A31 sur lesquels sont montées les électrovannes d'injection 111, 121 et 131, sont alimentés en liquide par un conduit commun d'alimentation A1C relié à ces trois conduits d'injection A11, A21 et A31 en amont des électrovannes d'injection 111, 121 et 131.

Alternativement, le système d'injection de liquide du dispositif de vascularisation 1 peut comprendre une seule électrovanne d'injection montée sur le conduit commun d'alimentation A1C (non représenté).

Dans l'exemple de la figure 1, le dispositif de vascularisation 1 comprend aussi trois électrovannes d'évacuation 112, 122 et 132. Ces électrovannes d'évacuation 112, 122 et 132 sont respectivement montées sur des conduits d'évacuation A12, A22 et A32 du dispositif de vascularisation 1. Les conduits d'évacuation A12, A22 et A32 sont reliés, d'une part, aux conduits A1, A2 et A3, c'est-à-dire au réseau artériel et, d'autre part, à un conduit commun d'évacuation A4.

Un tel agencement des électrovannes d'injection 111, 121 et 131 et des électrovannes d'évacuation 112, 122 et 132 permet d'injecter le liquide provenant du conduit commun d'alimentation A1C dans le réseau artériel via les conduits d'injection A11, A21 et A31 et d'évacuer le liquide provenant du réseau artériel vers le conduit commun d'évacuation A4 via les conduits d'évacuation A12, A22 et A32.

Le système d'injection de liquide de la figure 1 comprend aussi un régulateur de pression de liquide 14 agencé pour régler la pression d'injection du liquide dans le circuit cardiovasculaire. Ce régulateur de pression de liquide 14 est monté sur le conduit commun d'alimentation A1C, de sorte que le liquide arrivant dans les conduits d'injection A11, A21 et A31 est régulé en pression par ce régulateur de pression de liquide 14.

Ainsi, l'au moins un paramètre d'injection du liquide réglé par le système d'injection de liquide comprend dans cet exemple une pression (réglée par le régulateur de pression de liquide 14), ainsi qu'un débit et/ou une fréquence (réglés par les électrovannes d'injection 111, 121 et 131) d'injection du liquide dans le circuit cardiovasculaire.

En outre, le dispositif de vascularisation 1 comprend aussi un système de mesure de liquide agencé pour mesurer au moins un paramètre représentatif d'un flux de liquide dans le circuit cardiovasculaire.

Cet au moins un paramètre représentatif d'un flux du liquide dans le circuit cardiovasculaire comprend un débit du liquide dans le circuit cardiovasculaire. Pour ce faire, le système de mesure de liquide comprend au moins un débitmètre (trois débitmètres 151, 152 et 153 dans l'exemple de la figure 1) agencé pour mesurer le débit du liquide dans le circuit cardiovasculaire. Dans cet exemple, les débitmètres 151, 152 et 153 sont respectivement montés sur les conduits d'injection A11, A21 et A31, en amont des électrovannes d'injection 111, 121 et 131.

Alternativement, le système de mesure de liquide peut comprendre un seul débitmètre monté sur le conduit commun d'alimentation A1C (non représenté).

Dans l'exemple de la figure 1, le système de mesure de liquide comprend en outre un capteur de pression intracardiaque 16 agencé pour mesurer une pression intracardiaque du liquide dans le cœur, cette pression intracardiaque constituant un paramètre représentatif du flux du liquide dans le circuit cardiovasculaire.

Le capteur de pression intracardiaque 16 est par exemple inséré dans le cœur 92 du cadavre 9 de la figure 2 par l'artère carotide commune droite 914 de ce cadavre 9.

Plusieurs modes d'injection de liquide peuvent être mise en œuvre par le dispositif de vascularisation 1 de l'invention.

Les électrovannes d'injection 111, 121 et 131 et les électrovannes d'évacuation 112, 122 et 132 constituent, deux par deux, des mécanismes de circulation : l'électrovanne d'injection 111 et l'électrovanne d'évacuation 112 constitue un mécanisme de circulation 11 monté sur le conduit A1 ; l'électrovanne d'injection 121 et l'électrovanne d'évacuation 122 constitue un mécanisme de circulation 12 monté sur le conduit A2 ; l'électrovanne d'injection 131 et l'électrovanne d'évacuation 132 constitue un mécanisme de circulation 13 monté sur le conduit A3. Ces mécanismes de circulation 11, 12 et 13 sont agencés pour prendre sélectivement deux positions :
- une position d'injection dans laquelle le liquide peut circuler dans le conduit A1, A2 et/ou A3 au travers du mécanisme de circulation 11, 12 et/ou 13 depuis le système d'injection de liquide vers le réseau artériel et dans laquelle le liquide ne peut pas circuler dans le conduit A1, A2 et/ou A3 au travers du mécanisme de circulation 11, 12 et/ou 13 depuis le réseau artériel vers le système d'injection de liquide,
- une position d'évacuation dans laquelle le liquide peut circuler dans le conduit A1, A2 et/ou A3 au travers du mécanisme de circulation 11, 12 et/ou 13 depuis le réseau artériel vers le système d'injection de liquide et dans laquelle le liquide ne peut pas circuler dans le conduit A1, A2 et/ou A3 au travers du mécanisme de circulation 11, 12 et/ou 13 depuis le système d'injection de liquide vers le réseau artériel.

Pour sélectionner des modes d'injection de liquide, le dispositif de vascularisation 1 comprend un sélecteur (non représenté) agencé pour sélectionner au moins deux modes d'injection de liquide parmi :
- un mode de mise en pression dans lequel les trois mécanismes 11, 12 et 13 de circulation sont placés dans la position d'injection,
- un mode de mise en circulation dans lequel un ou deux des mécanismes de circulation sont placés dans la position d'injection et dans lequel le ou les autres mécanismes de circulation sont placés dans la position d'évacuation.

Le sélecteur (non représenté) peut consister en un sélecteur graphique sur une interface utilisateur de type graphique, ou en un commutateur mécanique, par exemple à trois positions.

Le mode de mise en circulation est de préférence mis en œuvre, alternativement, de deux manières différentes :
- mise en circulation divergente : un mécanisme de circulation (par exemple 11) est placé dans la position d'injection et les deux autres mécanismes de circulation (dans l'exemple 12 et 13) sont placés dans la position d'évacuation : dans l'exemple ici décrit, le liquide est dans ce cas injecté dans le réseau artériel par l'artère carotide commune gauche et est évacué du réseau artériel par les artères fémorales droite et gauche, entraînant une circulation du liquide dans le réseau artériel du haut vers le bas du cadavre humain 9 ;
- mise en circulation convergente : un mécanisme de circulation (par exemple 11) est placé dans la position d'évacuation et les deux autres mécanismes de circulation (dans l'exemple 12 et 13) sont placés dans la position d'injection : dans l'exemple ici décrit, le liquide est dans ce cas injecté dans le réseau artériel par les artères fémorales droite et gauche et est évacué du réseau artériel par l'artère carotide commune gauche, entraînant une circulation du liquide dans le réseau artériel du bas vers le haut du cadavre humain 9.

De préférence, le dispositif de vascularisation 1 de l'invention comprend en outre, tel qu'illustré en figure 1 :
- un mitigeur thermostatique 171 alimenté par exemple en eau chaude 17a et en eau froide 17b de manière à alimenter le conduit commun d'alimentation A1C avec un liquide (eau) ayant une température d'environ 37 °C à +/- 1 °C ; alternativement, cela peut être réalisé par un chauffe-eau 172 régulé et pressurisé à au moins deux bars, ou par tout autre moyen ; et/ou
- un robinet d'alimentation 173 monté sur le conduit commun d'alimentation A1C après le mitigeur thermostatique 171 ou le chauffe-eau 172, ce robinet d'alimentation 173 étant de préférence manuel et permettant d'alimenter le dispositif en liquide ; et/ou
- un capteur de pression 174, de type manomètre à aiguille ou digital, monté sur le conduit commun d'alimentation A1C en aval du régulateur de pression de liquide 14 et en amont des débitmètres 151, 152 et 153, afin de permettre un contrôle visuel de la pression du liquide dans ce conduit ; et/ou
- un thermomètre 175, de type thermocouple, monté sur le conduit commun d'alimentation A1C en aval du régulateur de pression de liquide 14 et en amont des débitmètres 151, 152 et 153, afin de permettre un contrôle visuel de la température du liquide dans ce conduit ; et/ou
- un injecteur 176, par exemple de type pompe à galets, agencé pour introduire une solution dans le liquide circulant dans le conduit commun d'alimentation A1C, cette solution permettant de rendre ce liquide similaire à du sang, en termes de couleur et/ou de viscosité.

Il ressort de la présente description que l'expression « circuit cardiovasculaire » désigne un circuit comprenant :
- une partie appartenant au simulateur médico-chirurgical selon l'invention, en particulier les conduits A1, A2 et A3 ;
- une partie n'appartenant pas au simulateur médico-chirurgical selon l'invention, en particulier les artères 911, 912 et 913 ainsi que le cœur 92 du cadavre humain 9.

### Description du dispositif de ventilation

Le dispositif de ventilation 2 comprend un système d'injection de gaz agencé pour injecter un gaz dans le circuit respiratoire. Dans l'exemple de la figure 1, ce système d'injection de gaz comprend un distributeur pneumatique 21 agencé pour régler un débit et/ou une fréquence d'injection du gaz dans le circuit respiratoire. Dans cet exemple, ce système d'injection de gaz comprend aussi un régulateur de pression de gaz 24 monté en amont du distributeur pneumatique 21 et agencé pour régler la pression d'injection du gaz dans le circuit respiratoire. En outre, le système d'injection de gaz comprend aussi la sonde orotrachéale 96 agencée pour injecter le gaz dans la trachée 95 du cadavre humain 9 (voir figure 3).

Le système d'injection de gaz est agencé pour régler au moins un paramètre d'injection du gaz dans le circuit respiratoire, cet au moins un paramètre d'injection du gaz comprenant la pression et/ou le débit et/ou la fréquence d'injection du gaz dans le circuit respiratoire.

Le dispositif de ventilation 2 comprend en outre un système de mesure de gaz agencé pour mesurer au moins un paramètre représentatif d'un flux du gaz dans le circuit respiratoire. De préférence, cet au moins un paramètre représentatif d'un flux du gaz dans le circuit respiratoire comprend un débit du gaz dans le circuit respiratoire. Pour ce faire, le système de mesure de gaz de la figure 1 comprend un débitmètre pneumatique 25 agencé pour mesurer le débit du gaz dans le circuit respiratoire.

De préférence, le dispositif de ventilation 2 de l'invention comprend en outre, tel qu'illustré en figure 1 :
- un module de chauffage d'air comprimé 271, par exemple un chauffe air régulé et pressurisé à au moins deux bars, permettant d'injecter dans le conduit E1 en tant que gaz de l'air ayant une température d'environ 37 °C à +/- 1 °C, ce module de chauffage 271 étant alimenté en air comprimé par exemple à 8 bars ; et/ou
- un robinet d'alimentation 272 monté sur le conduit E1 après le module de chauffage 271 et en amont du régulateur de pression de gaz 24, ce robinet d'alimentation 272 étant de préférence manuel et permettant d'alimenter le dispositif en air comprimé ; et/ou
- un manomètre 273, par exemple monté en aval du régulateur de pression de gaz 24 et en amont du débitmètre pneumatique 25, ce manomètre 273 permettant de contrôler visuellement la pression d'air circulant dans le conduit E1 ; et/ou
- un filtre à air 274 agencé pour filtrer l'air provenant du circuit respiratoire, afin d'éviter de rejeter dans l'environnement du simulateur médico-chirurgical un air qui aurait été contaminé par son passage dans les poumons 941 et 942 du cadavre 9.

Il ressort de la présente description que l'expression « circuit respiratoire » désigne un circuit comprenant :
- une partie appartenant au simulateur médico-chirurgical selon l'invention, en particulier le conduit E1 ;
- une partie n'appartenant pas au simulateur médico-chirurgical selon l'invention, en particulier la trachée 95 ainsi que les poumons 941 et 942 du cadavre humain 9.

### Description du dispositif de régulation

Le dispositif de régulation 3 est agencé pour :
- lire au moins un paramètre d'entrée, l'au moins un paramètre d'entrée comprenant :
   ∘ un ou plusieurs paramètres parmi l'au moins un paramètre mesuré par le système de mesure de liquide et/ou par le système de mesure de gaz, et/ou
   ∘ un ou plusieurs paramètres parmi l'au moins un paramètre d'injection du liquide et/ou l'au moins un paramètre d'injection du gaz,
- régler, via le système d'injection de liquide et/ou le système d'injection de gaz, au moins un paramètre de sortie en fonction de l'au moins un paramètre d'entrée, l'au moins un paramètre de sortie comprenant un ou plusieurs paramètres parmi l'au moins un paramètre d'injection du liquide et/ou l'au moins un paramètre d'injection du gaz, l'au moins un paramètre de sortie étant différent de l'au moins un paramètre d'entrée.

Le dispositif de régulation 3 comprend de préférence des moyens ou « interface utilisateur » (par exemple, bouton, molettes, clavier informatique et/ou écran tactile... non représenté) pour entrer manuellement un ou plusieurs paramètres parmi l'au moins un paramètre d'injection du liquide et/ou l'au moins un paramètre d'injection du gaz en tant que paramètre d'entrée. De tels moyens (non représentés) permettent à un enseignant de déclencher manuellement un événement afin de simuler par exemple un arrêt cardiaque ou une modification de rythme cardiaque et/ou respiratoire.

De tels moyens d'entrée (non représentés) permettent aussi à un enseignant de déclencher manuellement un scénario tel que décrit ci-dessous.

Pour ce faire, le dispositif de régulation 3 comprend dans l'exemple de la figure 1 une mémoire informatique 4 dans laquelle sont enregistrés un ou plusieurs modèles parmi :
- Un modèle cardiaque-respiratoire dans lequel le dispositif de régulation 3 lit comme paramètre(s) d'entrée un ou plusieurs parmi l'au moins un paramètre d'injection du liquide et règle comme paramètre(s) de sortie, via le système d'injection de gaz, un ou plusieurs parmi l'au moins un paramètre d'injection du gaz en fonction de ce(s) paramètre(s) d'entrée ;
- Un modèle respiratoire-cardiaque dans lequel le dispositif de régulation lit comme paramètre(s) d'entrée un ou plusieurs parmi l'au moins un paramètre d'injection du gaz et règle comme paramètre(s) de sortie, via le système d'injection de liquide, un ou plusieurs parmi l'au moins un paramètre d'injection du liquide en fonction de ce(s) paramètre(s) d'entrée ;
- Un modèle cardiaque-cardiaque dans le dispositif de régulation lit comme paramètre(s) d'entrée un ou plusieurs parmi l'au moins un paramètre d'injection du liquide et règle comme paramètre(s) de sortie, via le système d'injection de liquide, un ou plusieurs parmi l'au moins un paramètre d'injection du liquide en fonction de ce(s) paramètre(s) d'entrée, ce(s) paramètre(s) de sortie étant différent de ce(s) paramètre(s) d'entrée ;
- Un modèle respiratoire-respiratoire dans le dispositif de régulation lit comme paramètre(s) d'entrée un ou plusieurs parmi l'au moins un paramètre d'injection du gaz et règle comme paramètre(s) de sortie, via le système d'injection de gaz, un ou plusieurs parmi l'au moins un paramètre d'injection du gaz en fonction de ce(s) paramètre(s) d'entrée, ce(s) paramètre(s) de sortie étant différent de ce(s) paramètre(s) d'entrée.

Le réglage du ou des paramètres de sortie est par exemple une fonction linéaire, ou parabolique ou polynomiale du ou des paramètres d'entrée, et de préférence une fonction polynomiale.

En outre, dans cet exemple, la mémoire informatique 4 comprend plusieurs scénarii enregistrés, chaque scénario correspondant à une combinaison, spécifique à ce scénario, de plusieurs modèles. Des exemples de scénarii sont donnés ci-dessous.

Le dispositif de régulation 3 comprend un ordinateur (non représenté) et un logiciel (non représenté) permettant d'exécuter ses fonctions.

Le dispositif de régulation 3 ne comprend que des moyens techniques : informatiques et/ou logiciels et/ou électroniques et/ou mécaniques.

### Exemples de mise en œuvre du simulateur médico-chirurgical

Outre l'installation des canules 931, 932 et 933 (orientées vers le cœur) dans les artères fémorales gauche 913 et droite 912 et dans l'artère carotide commune gauche 911, et l'insertion dans l'artère carotide commune droite 914 de la sonde intracardiaque 16, des canules (non représentées) sont aussi insérées dans les veines jugulaires internes (non représentées, canules orientées vers le cœur) et dans les veines fémorales (non représentées, canules orientées vers la convergence cave). En outre, l'extrémité céphalique et les extrémités des quatre membres du cadavre 9 sont exclues par ligature des axes vasculaires en aval des canules, au niveau cervical bilatéral d'une part, au niveau brachial et fémoral bilatéral d'autre part. Cette exclusion distale et périphérique permet d'obtenir de façon optimale la vascularisation du tronc (thorax ou abdomen). Mais la position des canules et des ligatures peut être revue pour autoriser le cas échéant la revascularisation d'un membre.

### Processus d'initialisation

Une première étape consiste à déterminer la pression initiale d'injection de liquide et de gaz. Pour ce faire, un enseignant règle toute d'abord la pression d'injection du liquide, à l'aide du régulateur de pression de liquide 14, afin d'obtenir une pression intracardiaque de 140 mmHg mesurée par la sonde intracardiaque 16. Dans un premier temps, le dispositif de régulation 3 pilote les trois électrovannes d'injection 111, 121 et 131 à une fréquence cardiaque initiale définie (typiquement : 60 battements par minute, 31% de systole). Pour ce faire, un signal de type carré correspondant (typiquement : 1Hz, 31% de mi-période) commande les électrovannes d'injection, via une carte E/S, par l'ordinateur du dispositif de régulation. Dans un second temps, la pression d'injection de liquide est déterminée par un réglage du régulateur de pression d'injection de liquide 14 piloté par le PC, via la carte E/S, en tension (volt) afin d'obtenir une valeur de 0,05 bar (faible pression d'injection initiale du premier temps). Puis le logiciel du dispositif de régulation 3 augmente progressivement la tension de pilotage du régulateur de pression d'injection de liquide 14 et ceci jusqu'à atteindre une mesure par la sonde intracardiaque 16 de 140 mmHg - l'enseignant réglant le dispositif peut utiliser l'indication fournie par le capteur de pression 174.

A ce stade, sur le plan respiratoire et concernant la pression d'injection de gaz, le logiciel commence à piloter, à l'aide d'un signal carré envoyé via la carte E/S, le distributeur pneumatique 21 à une fréquence typiquement de 40 cycles par minute (0,66 Hz, 50% d'inspiration). Le logiciel du dispositif de régulation 4 pilote, en tension (volt), le régulateur de pression de gaz 24 afin d'obtenir au début de séance une pression de gaz injecté dans les poumons 941, 942 de 0,05 bar (valeur mesurée par le manomètre 273 et par exemple renvoyée à l'ordinateur pour être affichée sur un écran de commande). Puis le logiciel augmente la tension (volt) de pilotage du régulateur de pression de gaz 24 jusqu'à obtenir une pression d'air injecté de 0,4 bar (cette valeur est modifiable par l'enseignant en fonction du mouvement désiré de la cage thoracique du cadavre 9). L'augmentation se fait d'une manière progressive (durée = environ 2 à 3 minutes) afin d'avoir une mise sous pression progressive des poumons 941 et 942, d'utiliser la compliance pulmonaire et la compliance de la cage thoracique et d'éviter les barotraumatismes pleuro-pulmonaires pouvant compromettre les mouvements respiratoires (cyclage de souplesse).

Les valeurs initiales issues de ce processus d'initialisation sont mémorisées par la mémoire informatique 4 et sont par exemple définies de la manière suivante :
- la fréquence cardiaque initiale (F card init),
- le % systole/diastole initial (% systol init),
- la pression d'injection du faux sang initiale (P card initial),
- la fréquence respiratoire initiale (F resp init),
- le % d'inspiration/ expiration (% insp init),
- la pression d'insufflation respiratoire (P resp init).

### Simulation d'un arrêt cardiaque déclenché par l'enseignant

Dans le cadre d'un scénario d'arrêt cardiaque, l'enseignant peut souhaiter simuler un arrêt cardiaque du cadavre 9 vascularisé et déclencher. Lorsque ce scénario est déclenché par l'enseignant, un apprenant reçoit des informations visuelles par l'intermédiaire d'un moniteur médical (scope médical) sous la forme : modification du rythme cardiaque par bradycardie progressive, puis asystolie.

Lorsque ce scénario est déclenché, l'ordinateur adapte, en fonction du scénario pré-déterminé et mémorisé dans la mémoire informatique 4, le signal carré envoyé aux trois électrovannes d'injection 111, 121, 131 en réduisant progressivement ou très rapidement sa fréquence, ainsi que le % de mi-période : diminution % systole/diastole corrélée à la diminution de la fréquence cardiaque (loi de comportement de l'arrêt cardiaque, fréquence cardiaque = f(temps)). Pendant cette phase de diminution de la fréquence cardiaque, seules les trois électrovannes d'injection sont actionnées de manière fréquentielle, alors que les trois électrovannes d'évacuation 112, 122, 132 ne sont pas modifiées. La diminution ira jusqu'à l'arrêt du signal envoyé aux électrovannes (arrêt cardiaque). Tout au long de cette diminution du rythme cardiaque les informations acquises par la sonde intracardiaque 16 sont renvoyées de manière visuelle à l'apprenant via le moniteur médical.

Parallèlement, une diminution de la pression dans le circuit cardiovasculaire est induite (pour que l'apprenant puisse le ressentir sur le cadavre 9 vascularisé : disparition du pouls aortique). Pour simuler ce phénomène, le logiciel (par l'ordinateur via la carte E/S) diminue la tension envoyée au régulateur de pression de liquide 14, jusqu'à ne plus avoir aucune pression dans le conduit commun d'alimentation A1C (mesure réalisée par le capteur de pression 174). C'est l'ordinateur qui calcule cette diminution en fonction d'une loi de comportement de type pression artérielle = f(temps). Cela a pour effet de diminuer la pression intracardiaque (mesurée par la sonde intracardiaque 16 et affichée sur le moniteur médical).

Il n'y a pas de modification physique dans le circuit respiratoire. La cage thoracique garde le même mouvement (au bloc opératoire réel, une machine continue à injecter un gaz).

Par contre, au niveau du moniteur médical, on fait progressivement diminuer l'oxymétrie jusqu'à 60% afin de signifier à l'apprenant que le patient est décédé. C'est l'ordinateur qui réalise cette modification sur le moniteur médical. La vitesse de diminution de l'oxymétrie est prédéfinie dans l'ordinateur.

### Simulation d'une modification simple du rythme cardiaque déclenchée par l'enseignant

L'enseignant définit une nouvelle valeur de la fréquence cardiaque et donc le % systole/diastole. Puis, c'est le logiciel qui envoie aux électrovannes d'injection 111, 121, 131, le signal carré correspondant aux paramètres voulus. Le temps pour atteindre la nouvelle valeur de la fréquence cardiaque est également défini par l'enseignant (une dizaine de seconde). La modification du rythme cardiaque est donnée visuellement à l'apprenant par le moniteur médical.

Le retour aux valeurs initiales de la fréquence cardiaque obéit au même processus mais en sens inverse.

### Simulation d'une modification du rythme respiratoire déclenchée par l'enseignant

La fréquence ventilatoire et le pourcentage d'inspiration/expiration peuvent aussi être modifiés en fonction de scenarii. Le résultat physique sur le cadavre 9 se caractérise par la modification de la fréquence de l'ampliation de la cage thoracique et des mouvements du diaphragme, pouvant gêner l'apprenant dans son geste chirurgical. Cela doit aussi se traduire visuellement pour l'apprenant sur le monitoring médical par la modification des paramètres : capnographie (concentration de CO₂), oxymétrie de pouls, fréquence respiratoire. Le logiciel qui effectue un rafraîchissement visuel en temps réel, sur le moniteur médical.

Le logiciel doit alors modifier le signal carré envoyé au distributeur pneumatique 21, calculé à partir des données respiratoires imposées par l'enseignant (nombre de cycle par minute et pourcentage d'inspiration/expiration). Cette modification (augmentation ou diminution de la fréquence respiratoire) calculée par le logiciel peut être réalisée sur une certaine période, définie par l'enseignant (accélération ou décélération de la fréquence respiratoire).

Il n'y a pas de modification de pression d'insufflation.

Cette modification ventilatoire peut aller jusqu'à l'arrêt ventilatoire, c'est-à-dire, un arrêt complet de la mobilisation du thorax et du diaphragme avec leur traduction sur le monitoring médical par une chute de la capnographie et de l'oxymétrie de pouls. Dans ce cas, le logiciel met hors-tension le distributeur pneumatique 21.

La reprise de la ventilation se fait de la même manière mais dans le sens inverse. C'est-à-dire, l'enseignant ordonne au logiciel de nouveaux paramètres respiratoires (nombre de cycle par minute et pourcentage d'inspiration/expiration). Il peut aussi réinitialiser les paramètres respiratoires initiaux. Le logiciel calcule alors la fréquence du nouveau signal carré adéquat, envoyé au distributeur pneumatique 21 (via la carte E/S). Le reprise progressive de la respiration (augmentation de la fréquence respiratoire) se fera sur une durée définie par l'enseignant selon une loi de comportement de type « Reprise de fréquence respiratoire = f (temps) ». Les paramètres respiratoires (capnographie, oxymétrie de pouls et fréquence respiratoire) sont alors mis à jour sur le moniteur médical en temps réel afin de donner les informations à l'apprenant.

Dans la présente description, l'expression « =f(X) » signifie « est une fonction de X ».

### Passage du mode mise sous pression artérielle (non circulant) au mode circulation sanguine artérielle

Comme indiqué plus haut, la vascularisation (pulsatile) du cadavre 9 peut fonctionner selon trois modes d'injection de liquide.

Le mode de mise en pression, dans lequel il n'y a pas de circulation significative du liquide dans le circuit cardiovasculaire. Cela permet de détecter plus facilement les fuites et de minimiser la quantité de liquide utilisé. C'est le mode utilisé principalement. Lorsque les trois électrovannes d'évacuation 112, 122, 132 sont fermées, c'est-à-dire non pilotées en tension (volt) par l'ordinateur (via la carte E/S), la pulsatilité du réseau artériel du cadavre vascularisé est obtenue par des mises sous pression des colonnes liquidiennes du réseau artériel. La pulsativité se fait donc avec un pilotage des trois électrovannes d'injection 112, 122, 132. L'écoulement du liquide se fait uniquement par le système veineux après la traversée des organes (cœur 92). Ce mode de fonctionnement présente l'avantage de consommer moins de liquide, de revasculariser les organes ou les viscères du thorax et/ou de l'abdomen du cadavre leur donnant une meilleure couleur (concentration de colorant plus important), texture et température proche de la réalité et d'obtenir un débit, une pression, une turgescence du système veineux avant un écoulement du liquide par des canules veineuses vers l'extérieur.

Le mode de circulation divergent (circulation du haut du corps vers le bas du corps) : dans ce cas, l'ordinateur, après avoir reçu l'ordre par l'enseignant, réalise les taches suivantes :
- Envoi d'un signal carré à l'électrovanne d'injection 111 injectant le liquide dans l'artère carotidienne 911 (fonction de la fréquence cardiaque et du % de systole/diastole),
- Fermeture (mise hors tension) des deux autres électrovannes d'injection 121, 131 reliées aux artères fémorales 912, 913,
- Ouverture (mise sous tension) des deux électrovannes d'évacuation 122, 132 reliées aux artères fémorales en envoyant une tension continue (non pulsatile) via la carte E/S,
- Fermeture (mirs hors tension) de l'électrovanne d'évacuation 112 reliée à l'artère carotidienne.

Le mode de circulation convergent (circulation du bas du corps vers le haut du corps) : l'enseignant peut aussi inverser le sens de circulation en ordonnant au PC :
- L'envoi d'un signal carré aux deux électrovannes d'injection 121, 131 reliées aux artères fémorales 912, 913 (fonction de la fréquence cardiaque et du % de systole/diastole),
- De fermer (pas de tension) l'électrovanne d'injection 111 reliée à l'artère carotidienne 911,
- D'ouvrir l'électrovanne d'évacuation 112 reliée à l'artère carotidienne en envoyant une tension continue (non pulsatile) via la carte E/S,
- De fermer (pas de tension) les deux électrovannes d'évacuation 122, 132 reliées aux artères fémorales.

### Scénario non déclenché par l'enseignant : plaie vasculaire accidentelle

De façon schématique, une plaie vasculaire accidentelle réalisée par l'apprenant au cours du scénario chirurgical entraîne une fuite du liquide (simulant le sang) et donc une diminution des pressions dans le circuit cardiovasculaire.

Dans ce cas, il y a une augmentation significative du débit de liquide injecté mesuré par les débitmètres 151, 152, 153. Si le logiciel détecte une telle augmentation de débit, il doit alors :
- Afficher la chute de tension artérielle sur le moniteur médical grâce aux données recueillies par la sonde intracardiaque 16,
- Calculer l'augmentation de la fréquence cardiaque (ainsi que le % de systole/diastole) en fonction de la loi de comportement (fréquence cardiaque = f(débit injecté)) définie par le scénario. Le pourcentage de systole/diastole est déterminé grâce à la fréquence cardiaque. Cette modification de la fréquence cardiaque sera affichée sur le moniteur médical. Le nouveau signal carré calculé sera envoyé sur les trois électrovannes d'injection 111, 121, 131 afin de modifier le pouls ressenti physiquement par l'apprenant sur le cadavre 9 vascularisé,
- Il n'y a pas de modification de la fréquence respiratoire.

Après un temps prédéfini par l'enseignant, sans contrôle de la plaie vasculaire et donc avec persistance d'un débit élevé mesuré, une nouvelle réponse est induite avec ralentissement cardiaque (et donc effondrement des pressions circulatoires) signifiant à l'apprenant la gravité de la situation hémodynamique.

Le logiciel ordonne donc une diminution de la fréquence de signal carré qui pilote les trois électrovannes d'injection, selon une loi de comportement définie par l'enseignant (fréquence cardiaque = f (temps) ou bien prise dans des modèles prédéfinis disponibles dans la mémoire informatique 4).

Parallèlement, la fréquence cardiaque ainsi que la pression intracardiaque sont modifiées en temps réel sur le moniteur médical afin de donner l'information visuelle à l'apprenant.

La pression d'injection de liquide est diminuée, en abaissant la tension (volt) envoyé par l'ordinateur (via la carte E/S) au régulateur de pression de liquide 14. La vitesse de diminution de cette pression d'injection sera définie par l'enseignant ou bien préprogrammée par exemple à 10 secondes.

Si la plaie vasculaire est réparée, le débit enregistré revient à la situation basale initiale, la réaction automatique ramène toutes les constantes à l'état initial. Dans ce cas, l'ordinateur modifie les signaux carrés envoyés respectivement aux trois électrovannes d'injection 111, 121, 131 et au distributeur pneumatique 21, avec les valeurs initiales définies ci-dessus.

Si la plaie vasculaire n'est pas réparée, le tableau d'arrêt circulatoire s'enclenche. Ce qui se traduit par un arrêt complet des trois électrovannes d'injection et du distributeur pneumatique. L'ordinateur n'émet plus de signaux carré en direction de ces actionneurs.

Le scénario qui vient d'être décrit peut aussi être déclenché par une perte de pression intracardiaque mesurée par la sonde intracardiaque 16.

Optionnellement, lorsque l'une des trois électrovannes d'injection reçoit un signal carré (via la carte E/S) par l'ordinateur, ce dernier ordonne la mise en route de l'injecteur (pompe à galets) 176 afin d'injecter du colorant rouge dans le liquide dans le conduit commun d'alimentation A1C permettant de simuler du sang.

Des thermocouples (dont par exemple le thermomètre 175) permettent d'afficher en temps réel, sur le moniteur médical, la température du liquide et du gaz injectés.

Le liquide injecté par une ou plusieurs des canules, selon la perméabilité des axes vasculaires et le scénario envisagé, simule le sang en couleur, température, texture et viscosité. Ce liquide de simulation emprunte le réseau artériel dans le sens anatomique et fonctionnel classique, gagne les viscères, les revascularise par les capillaires et revient vers les canules veineuses en suivant, là, le sens physiologique du sang. Il est alors éliminé du corps.

Les entrées artérielles permettent de maintenir une colonne de pression dans le système artériel. Les électrovannes 111, 121 et 131 assurent la dimension pulsatile de cette colonne de liquide mimant ainsi pour le chirurgien les battements cardiaques transmis aux vaisseaux.

Le passage du sang simulé dans les organes redonne à ceux-ci une recoloration, une température et une texture réalistes.

L'absence de battement du cœur ne pose pas de problème pour la chirurgie cardiaque puisque celle-ci est réalisée en clinique humaine sous cardioplégie froide et CEC dans les scénarii proposés.

Dans la description ci-dessus, le cadavre (9) est un cadavre humain. Toutefois, l'invention peut être mise en œuvre sur un cadavre animal non-humain.

Bien sûr, l'invention n'est pas limitée aux exemples qui viennent d'être décrits et de nombreux aménagements peuvent être apportés à ces exemples sans sortir du cadre de l'invention. Par exemple, un dispositif d'aspiration (non représenté) peut être utilisé afin d'aspirer des liquides situés dans l'estomac du cadavre et d'éviter l'estomac de gonfler. Un tel dispositif d'aspiration (non représenté) peut consister en une sonde gastrique (tube de faucher) connectée à un système d'aspiration (de vide d'air) permettant ainsi l'aspiration de liquides situés dans l'estomac. Une telle sonde gastrique peut être introduite par la bouche du cadavre de manière à positionner l'extrémité aspirante dans l'estomac. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Simulateur médico-chirurgical comprenant :
- un dispositif de vascularisation (1) agencé pour vasculariser un circuit cardiovasculaire, le dispositif de vascularisation (1) comprenant :
∘ des moyens de connexion (931, 932, 933) agencés pour connecter le dispositif de vascularisation (1) à un cœur (92) d'un cadavre (9) de sorte que ce cœur fasse partie du circuit cardiovasculaire,
∘ un système d'injection de liquide agencé pour injecter un liquide dans le circuit cardiovasculaire et pour régler au moins un paramètre d'injection du liquide dans le circuit cardiovasculaire,
∘ un système de mesure de liquide (151, 152, 153, 16) agencé pour mesurer au moins un paramètre représentatif d'un flux de liquide dans le circuit cardiovasculaire,
et/ou
- un dispositif de ventilation (2) agencé pour ventiler un circuit respiratoire, le dispositif de ventilation comprenant :
∘ des moyens de connexion (96) agencés pour connecter le dispositif de ventilation à des poumons (941, 942) du cadavre de sorte que ces poumons fassent partie du circuit respiratoire,
∘ un système d'injection de gaz agencé pour injecter un gaz dans le circuit respiratoire et pour régler au moins un paramètre d'injection du gaz dans le circuit respiratoire,
∘ un système de mesure de gaz (25) agencé pour mesurer au moins un paramètre représentatif d'un flux du gaz dans le circuit respiratoire,
le simulateur médico-chirurgical comprenant en outre un dispositif de régulation (3) agencé pour :
- lire au moins un paramètre d'entrée, l'au moins un paramètre d'entrée comprenant :
∘ un ou plusieurs paramètres parmi l'au moins un paramètre mesuré par le système de mesure de liquide et/ou par le système de mesure de gaz, et/ou
∘ un ou plusieurs paramètres parmi l'au moins un paramètre d'injection du liquide et/ou l'au moins un paramètre d'injection du gaz,
- **caractérisé en ce que** le dispositif de régulation (3) est en outre agencé pour régler, via le système d'injection de liquide et/ou le système d'injection de gaz, au moins un paramètre de sortie en fonction de l'au moins un paramètre d'entrée, l'au moins un paramètre de sortie comprenant un ou plusieurs paramètres parmi l'au moins un paramètre d'injection du liquide et/ou l'au moins un paramètre d'injection du gaz, l'au moins un paramètre de sortie étant différent de l'au moins un paramètre d'entrée.

2. Simulateur médico-chirurgical selon la revendication 1, **caractérisé en ce qu'**il comprend le dispositif de vascularisation et le dispositif de ventilation.

3. Simulateur médico-chirurgical selon la revendication 1 ou 2, **caractérisé en ce qu'**il comprend le dispositif de vascularisation (1) et **en ce que** l'au moins un paramètre d'injection du liquide comprend une pression et/ou un débit et/ou une fréquence d'injection du liquide dans le circuit cardiovasculaire.

4. Simulateur médico-chirurgical selon la revendication 3, **caractérisé en ce que** le système d'injection de liquide comprend :
- une ou plusieurs électrovannes d'injection (111, 121, 131) agencées pour régler le débit et/ou la fréquence d'injection du liquide dans le circuit cardiovasculaire, et/ou
- un régulateur de pression de liquide (14) agencé pour régler la pression d'injection du liquide dans le circuit cardiovasculaire.

5. Simulateur médico-chirurgical selon l'une quelconque des revendications 1 à 4, **caractérisé en ce qu'**il comprend le dispositif de vascularisation (1) et **en ce que** l'au moins un paramètre représentatif d'un flux du liquide dans le circuit cardiovasculaire comprend un débit du liquide dans le circuit cardiovasculaire.

6. Simulateur médico-chirurgical selon la revendication 5, **caractérisé en ce que** le système de mesure de liquide comprend un ou plusieurs débitmètres (151, 152, 153) agencés pour mesurer le débit du liquide dans le circuit cardiovasculaire.

7. Simulateur médico-chirurgical selon l'une quelconque des revendications 1 à 6, **caractérisé en ce qu'**il comprend le dispositif de vascularisation (1) et **en ce que** le système de mesure de liquide comprend en outre un capteur de pression intracardiaque (16) agencé pour mesurer une pression intracardiaque du liquide dans le cœur, cette pression intracardiaque constituant un paramètre représentatif du flux du liquide dans le circuit cardiovasculaire.

8. Simulateur médico-chirurgical selon l'une quelconque des revendications 1 à 7, **caractérisé en ce qu'**il comprend le dispositif de ventilation (2) et **en ce que** l'au moins un paramètre d'injection du gaz comprend une pression et/ou un débit et/ou une fréquence d'injection du gaz dans le circuit respiratoire.

9. Simulateur médico-chirurgical selon la revendication 8, **caractérisé en ce que** le système d'injection de gaz comprend :
- un distributeur pneumatique (21) agencé pour régler le débit et/ou la fréquence d'injection du gaz dans le circuit respiratoire, et/ou
- un régulateur de pression de gaz (24) agencé pour régler la pression d'injection du gaz dans le circuit respiratoire.

10. Simulateur médico-chirurgical selon l'une quelconque des revendications 1 à 9, **caractérisé en ce qu'**il comprend le dispositif de ventilation (2) et **en ce que** l'au moins un paramètre représentatif d'un flux du gaz dans le circuit respiratoire comprend un débit du gaz dans le circuit respiratoire.

11. Simulateur médico-chirurgical selon la revendication 10, **caractérisé en ce que** le système de mesure de gaz comprend un débitmètre pneumatique (25) agencé pour mesurer le débit du gaz dans le circuit respiratoire.

12. Simulateur médico-chirurgical selon l'une quelconque des revendications 1 à 11, **caractérisé en ce que** :
- il comprend le dispositif de vascularisation (1) et **en ce que** le dispositif de régulation comprend des moyens pour entrer manuellement l'au moins un paramètre d'injection du liquide en tant que paramètre d'entrée et/ou
- il comprend le dispositif de ventilation (2) et **en ce que** le dispositif de régulation comprend des moyens pour entrer manuellement l'au moins un paramètre d'injection du gaz en tant que paramètre d'entrée.

13. Simulateur médico-chirurgical selon l'une quelconque des revendications 1 à 12, **caractérisé en ce que** le dispositif de régulation comprend une mémoire informatique (4) dans laquelle sont enregistrés un ou plusieurs modèles parmi :
- Un modèle cardiaque-respiratoire dans lequel le dispositif de régulation lit comme paramètre(s) d'entrée un ou plusieurs parmi l'au moins un paramètre d'injection du liquide et règle comme paramètre(s) de sortie, via le système d'injection de gaz, un ou plusieurs parmi l'au moins un paramètre d'injection du gaz en fonction de ce(s) paramètre(s) d'entrée, le simulateur comprenant le dispositif de vascularisation (1) et le dispositif de ventilation (2);
- Un modèle respiratoire-cardiaque dans lequel le dispositif de régulation lit comme paramètre(s) d'entrée un ou plusieurs parmi l'au moins un paramètre d'injection du gaz et règle comme paramètre(s) de sortie, via le système d'injection de liquide, un ou plusieurs parmi l'au moins un paramètre d'injection du liquide en fonction de ce(s) paramètre(s) d'entrée, le simulateur comprenant le dispositif de vascularisation (1) et le dispositif de ventilation (2);
- Un modèle cardiaque-cardiaque dans le dispositif de régulation lit comme paramètre(s) d'entrée un ou plusieurs parmi l'au moins un paramètre d'injection du liquide et règle comme paramètre(s) de sortie, via le système d'injection de liquide, un ou plusieurs parmi l'au moins un paramètre d'injection du liquide en fonction de ce(s) paramètre(s) d'entrée, ce(s) paramètre(s) de sortie étant différent de ce(s) paramètre(s) d'entrée, le simulateur comprenant le dispositif de vascularisation (1);
- Un modèle respiratoire-respiratoire dans le dispositif de régulation lit comme paramètre(s) d'entrée un ou plusieurs parmi l'au moins un paramètre d'injection du gaz et règle comme paramètre(s) de sortie, via le système d'injection de gaz, un ou plusieurs parmi l'au moins un paramètre d'injection du gaz en fonction de ce(s) paramètre(s) d'entrée, ce(s) paramètre(s) de sortie étant différent de ce(s) paramètre(s) d'entrée, le simulateur comprenant le dispositif de ventilation (2).

14. Simulateur médico-chirurgical selon la revendication 13, **caractérisé en ce que** le réglage du ou des paramètres de sortie est une fonction linéaire, ou parabolique ou polynomiale du ou des paramètres d'entrée.

15. Simulateur médico-chirurgical selon la revendication 13 ou 14, **caractérisé en ce que** la mémoire informatique comprend plusieurs scénarii enregistrés, chaque scénario correspondant à une combinaison, spécifique à ce scénario, de plusieurs modèles.

16. Simulateur médico-chirurgical selon l'une quelconque des revendications 1 à 15, **caractérisé en ce qu'**il comprend le dispositif de vascularisation (1) et **en ce que** le dispositif de vascularisation comprend en outre trois conduits (A1, A2, A3) et **en ce que** les moyens de connexion du dispositif de vascularisation comprennent trois canules (931, 932, 933) reliées respectivement à ces trois conduits, ces canules et conduits étant agencés pour connecter le dispositif de vascularisation, par les canules, à trois artères (911, 912, 913) respectives du cadavre formant un réseau artériel de manière à permettre une injection du liquide dans ce réseau artériel par l'une au moins de ces canules.

17. Simulateur médico-chirurgical selon la revendication 16, **caractérisé en ce que** le dispositif de vascularisation comprend en outre :
- trois mécanismes de circulation (11, 12, 13) montés respectivement sur chacun des trois conduits, le mécanisme de circulation associé à chacun des conduits étant agencé pour prendre sélectivement deux positions :
∘ une position d'injection dans laquelle le liquide peut circuler dans le conduit au travers du mécanisme de circulation depuis le système d'injection de liquide vers le réseau artériel et dans laquelle le liquide ne peut pas circuler dans le conduit au travers du mécanisme de circulation depuis le réseau artériel vers le système d'injection de liquide,
∘ une position d'évacuation dans laquelle le liquide peut circuler dans le conduit au travers du mécanisme de circulation depuis le réseau artériel vers le système d'injection de liquide et dans laquelle le liquide ne peut pas circuler dans le conduit au travers du mécanisme de circulation depuis le système d'injection de liquide vers le réseau artériel,
- un sélecteur agencé pour sélectionner au moins deux modes d'injection de liquide parmi :
∘ un mode de mise en pression dans lequel les trois mécanismes de circulation sont placés dans la position d'injection,
∘ un mode de mise en circulation dans lequel un ou deux des mécanismes de circulation sont placés dans la position d'injection et dans lequel le ou les autres mécanismes de circulation sont placés dans la position d'évacuation.

18. Simulateur médico-chirurgical selon l'une quelconque des revendications 1 à 17, **caractérisé en ce qu'**il comprend le dispositif de ventilation (2) et **en ce que** les moyens de connexion du dispositif de ventilation sont agencés pour connecter ce dispositif de ventilation à une trachée (95) du cadavre de sorte que cette trachée fasse partie du circuit respiratoire, et **en ce que** le système d'injection de gaz comprend une sonde orotrachéale (96) agencée pour injecter le gaz dans cette trachée.

19. Procédé de simulation médico-chirurgicale comprenant :
- une étape de vascularisation dans laquelle un circuit cardiovasculaire est vascularisé par un dispositif de vascularisation (1), cette étape de vascularisation comprenant :
∘ une étape de connexion dans laquelle on connecte, par des moyens de connexion (931, 932, 933), le dispositif de vascularisation à un cœur (92) d'un cadavre (9) de sorte que ce cœur fasse partie du circuit cardiovasculaire,
∘ une étape d'injection de liquide dans laquelle on injecte, par un système d'injection de liquide, un liquide dans le circuit cardiovasculaire,
∘ une étape de réglage dans laquelle on règle, par le système d'injection de liquide, au moins un paramètre d'injection du liquide,
∘ de préférence une étape de mesure dans laquelle on mesure, par un système de mesure de liquide (151, 152, 153, 16), au moins un paramètre représentatif d'un flux de liquide dans le circuit cardiovasculaire,
et/ou
- une étape de ventilation dans laquelle un circuit respiratoire est ventilé par un dispositif de ventilation (2), cette étape de ventilation comprenant :
∘ une étape de connexion dans laquelle on connecte, par des moyens de connexion (96), le dispositif de ventilation à des poumons (941, 942) du cadavre (9) de sorte que ces poumons fassent partie du circuit respiratoire,
∘ une étape d'injection de gaz dans laquelle on injecte, par un système d'injection de gaz, un gaz dans le circuit respiratoire,
∘ une étape de réglage dans laquelle on règle, par le système d'injection de gaz, au moins un paramètre d'injection du gaz,
∘ de préférence une étape de mesure dans laquelle on mesure, par système de mesure de gaz (25), au moins un paramètre représentatif d'un flux du gaz dans le circuit respiratoire,
le procédé de simulation médico-chirurgicale comprenant en outre une étape de régulation dans laquelle :
- un dispositif de régulation (3) lit au moins un paramètre d'entrée, l'au moins un paramètre d'entrée comprenant :
∘ un ou plusieurs paramètres parmi l'au moins un paramètre mesuré par le système de mesure de liquide et/ou par le système de mesure de gaz, et/ou
∘ un ou plusieurs paramètres parmi l'au moins un paramètre d'injection du liquide et/ou l'au moins un paramètre d'injection du gaz,
- **caractérisé en ce qu'**en outre, dans l'étape de régulation, le dispositif de régulation (3) règle, via le système d'injection de liquide et/ou le système d'injection de gaz, au moins un paramètre de sortie en fonction de l'au moins un paramètre d'entrée, l'au moins un paramètre de sortie comprenant un ou plusieurs paramètres parmi l'au moins un paramètre d'injection du liquide et/ou l'au moins un paramètre d'injection du gaz, l'au moins un paramètre de sortie étant différent de l'au moins un paramètre d'entrée.

## Patentansprüche

1. Medizinisch-chirurgischer Simulator, umfassend:
- - eine Vaskularisationsvorrichtung (1), die zur Vaskularisation eines kardiovaskulären Kreislaufs eingerichtet ist, wobei die Vaskularisationsvorrichtung (1) umfasst:
∘ Verbindungsmittel (931, 932, 933), die zur Verbindung der Vaskularisationsvorrichtung (1) mit einem Herzen (92) einer Leiche (9) derart eingerichtet sind, sodass das Herz zu dem kardiovaskulären Kreislauf gehört,
∘ ein Flüssigkeitsinjektionssystem, das zur Injektion einer Flüssigkeit in den kardiovaskulären Kreislauf und zur Einstellung mindestens eines Injektionsparameters der Flüssigkeit in den kardiovaskulären Kreislauf eingerichtet ist,
∘ ein Flüssigkeitsmesssystem (151, 152, 153, 16), das zum Messen mindestens eines repräsentativen Parameters einer Flüssigkeitsströmung in dem kardiovaskulären Kreislauf eingerichtet ist,
und/oder
- - eine Belüftungsvorrichtung (2), die zur Belüftung eines Atemkreislaufs eingerichtet ist, wobei die Belüftungsvorrichtung umfasst:
∘ Verbindungsmittel (96), die zur Verbindung der Belüftungsvorrichtung mit Lungen (941, 942) der Leiche derart eingerichtet sind, sodass die Lungen zu dem Atemkreislauf gehören,
∘ ein Gasinjektionssystem, das zur Injektion eines Gases in den Atemkreislauf und zur Einstellung mindestens eines Injektionsparameters des Gases in den Atemkreislauf eingerichtet ist,
∘ ein Gasmesssystem (25), das zum Messen mindestens eines repräsentativen Parameters einer Strömung des Gases in dem Kreislauf eingerichtet ist,
wobei der medizinisch-chirurgische Simulator außerdem eine Regelungsvorrichtung (3) umfasst, welche dazu eingerichtet ist:
- mindestens einen Eingangsparameter zu lesen, wobei der mindestens eine Eingangsparameter umfasst:
∘ einen oder mehrere Parameter unter dem mindestens einen Parameter, der durch das Messsystem von Flüssigkeit und/oder durch das Messsystem von Gas gemessen wurde, und/oder
∘ einen oder mehrere Parameter unter dem mindestens einen Injektionsparameter der Flüssigkeit und/oder dem mindestens einen Injektionsparameter des Gases,
**dadurch gekennzeichnet, dass** die Regelungsvorrichtung (3) außerdem dazu eingerichtet ist, über das Flüssigkeitsinjektionssystem und/oder das Gasinjektionssystem mindestens einen Ausgangsparameter in Abhängigkeit von dem mindestens einen Eingangsparameter zu regeln, wobei der mindestens eine Ausgangsparameter einen oder mehrere Parameter unter dem mindestens einen Injektionsparameter der Flüssigkeit und/oder dem mindestens einen Injektionsparameter des Gases umfasst, wobei der mindestens eine Ausgangsparameter von dem mindestens einen Eingangsparameter abweicht.

2. Medizinisch-chirurgischer Simulator nach Anspruch 1, **dadurch gekennzeichnet, dass** er die Vaskularisationsvorrichtung und die Belüftungsvorrichtung umfasst.

3. Medizinisch-chirurgischer Simulator nach Anspruch 1 oder 2, **dadurch gekennzeichnet, dass** er die Vaskularisationsvorrichtung (1) umfasst und dadurch, dass der mindestens eine Injektionsparameter der Flüssigkeit einen Druck und/oder einen Durchfluss und/oder eine Häufigkeit der Injektion der Flüssigkeit in den kardiovaskulären Kreislauf umfasst.

4. Medizinisch-chirurgischer Simulator nach Anspruch 3, **dadurch gekennzeichnet, dass** das Flüssigkeitsinjektionssystem umfasst:
- einen oder mehrere Injektionsmagnetschieber (111, 121, 131), welche zur Einstellung des Durchflusses und/oder der Häufigkeit der Injektion der Flüssigkeit in den kardiovaskulären Kreislauf eingerichtet sind, und/oder
- einen Regler des Drucks von Flüssigkeit (14), welcher zur Regelung des Injektionsdrucks der Flüssigkeit in den kardiovaskulären Kreislauf eingerichtet ist.

5. Medizinisch-chirurgischer Simulator nach einem der Ansprüche 1 bis 4, **dadurch gekennzeichnet, dass** er die Vaskularisationsvorrichtung (1) umfasst und dadurch, dass der mindestens eine repräsentative Parameter einer Strömung der Flüssigkeit in dem kardiovaskulären Kreislauf einen Durchfluss der Flüssigkeit in dem kardiovaskulären Kreislauf umfasst.

6. Medizinisch-chirurgischer Simulator nach Anspruch 5, **dadurch gekennzeichnet, dass** das System zur Messung von Flüssigkeit ein oder mehrere Durchflussmessgeräte (151, 152, 153) umfasst, welche zur Messung des Durchflusses der Flüssigkeit in dem kardiovaskulären Kreislauf eingerichtet sind.

7. Medizinisch-chirurgischer Simulator nach einem der Ansprüche 1 bis 6, **dadurch gekennzeichnet, dass** er die Vaskularisationsvorrichtung (1) umfasst und dadurch, dass das Messsystem von Flüssigkeit außerdem einen Sensor des intrakardialen Drucks (16) umfasst, welcher zur Messung eines intrakardialen Drucks der Flüssigkeit in dem Herzen eingerichtet ist, wobei der intrakardiale Druck einen repräsentativen Parameter des Durchflusses der Flüssigkeit in dem kardiovaskulären Kreislauf ausbildet.

8. Medizinisch-chirurgischer Simulator nach einem der Ansprüche 1 bis 7, **dadurch gekennzeichnet, dass** er die Belüftungsvorrichtung (2) umfasst und dadurch, dass der mindestens eine Injektionsparameter des Gases einen Druck und/oder einen Durchfluss und/oder eine Häufigkeit der Injektion des Gases in den Atemkreislauf umfasst.

9. Medizinisch-chirurgischer Simulator nach Anspruch 8, **dadurch gekennzeichnet, dass** das Gasinjektionssystem umfasst:
- ein Wegeventil (21), welches zur Regelung des Durchflusses und/oder der Häufigkeit der Injektion des Gases in den Atemkreislauf eingerichtet sind, und/oder
- einen Regler des Gasdrucks (24), welcher zur Regelung des Injektionsdrucks des Gases in den Atemkreislauf eingerichtet ist.

10. Medizinisch-chirurgischer Simulator nach einem der Ansprüche 1 bis 9, **dadurch gekennzeichnet, dass** er die Belüftungsvorrichtung (2) umfasst und dadurch, dass der mindestens eine repräsentative Parameter einer Strömung des Gases in dem Atemkreislauf einen Durchfluss des Gases in dem Atemkreislauf umfasst.

11. Medizinisch-chirurgischer Simulator nach Anspruch 10, **dadurch gekennzeichnet, dass** das System zur Messung von Gas ein oder mehrere pneumatische Durchflussmessgeräte (25) umfasst, welche zur Messung des Durchflusses des Gases in dem Atemkreislauf eingerichtet sind.

12. Medizinisch-chirurgischer Simulator nach einem der Ansprüche 1 bis 11, **dadurch gekennzeichnet, dass**:
- er die Vaskularisationsvorrichtung (1) umfasst und dadurch, dass die Regelungsvorrichtung Mittel zur manuellen Eingabe des mindestens einen Injektionsparameters der Flüssigkeit als Eingangsparameter umfasst, und/oder
- er die Belüftungsvorrichtung (2) umfasst und dadurch, dass die Regelungsvorrichtung Mittel zur manuellen Eingabe des mindestens einen Injektionsparameters des Gases als Eingangsparameter umfasst.

13. Medizinisch-chirurgischer Simulator nach einem der Ansprüche 1 bis 12, **dadurch gekennzeichnet, dass** die Regelungsvorrichtung einen Datenverarbeitungsspeicher (4) umfasst, in welchem ein oder mehrere Modelle gespeichert werden unter den folgenden:
- ein Atem-Herzmodell, in welchem die Regelungsvorrichtung als einen oder mehrere Eingangsparameter einen oder mehrere unter dem mindestens einen Injektionsparameter der Flüssigkeit liest und als einen oder mehrere Ausgangsparameter über das Gasinjektionssystem einen oder mehrere unter dem mindestens einen Injektionsparameter des Gases in Abhängigkeit von dem/den Eingangsparameter(n) regelt, wobei der Simulator die Vaskularisationsvorrichtung (1) und die Belüftungsvorrichtung (2) umfasst;
- ein Herz-Atemmodell, in welchem die Regelungsvorrichtung als einen oder mehrere Eingangsparameter einen oder mehrere unter dem mindestens einen Injektionsparameter des Gases liest und als einen oder mehrere Ausgangsparameter über das Flüssigkeitsinjektionssystem einen oder mehrere unter dem mindestens einen Injektionsparameter der Flüssigkeit in Abhängigkeit von dem/den Eingangsparameter(n) regelt, wobei der Simulator die Vaskularisationsvorrichtung (1) und die Belüftungsvorrichtung (2) umfasst;
- ein Herz-Herzmodell, in welchem die Regelungsvorrichtung als einen oder mehrere Eingangsparameter einen oder mehrere unter dem mindestens einen Injektionsparameter der Flüssigkeit liest und als einen oder mehrere Ausgangsparameter über das Flüssigkeitsinjektionssystem einen oder mehrere unter dem mindestens einen Injektionsparameter der Flüssigkeit in Abhängigkeit von dem/den Eingangsparameter(n) regelt, wobei der(die) Ausgangsparameter von dem(den) Eingangsparameter(n) abweicht/abweichen, wobei der Simulator die Vaskularisationsvorrichtung (1) umfasst;
- ein Atem-Atemmodell, in welchem die Regelungsvorrichtung als einen oder mehrere Eingangsparameter einen oder mehrere unter dem mindestens einen Injektionsparameter des Gases liest und als einen oder mehrere Ausgangsparameter über das Gasinjektionssystem einen oder mehrere unter dem mindestens Injektionsparameter des Gases in Abhängigkeit von dem/den Eingangsparameter(n) regelt, wobei der(die) Ausgangsparameter von dem(den) Eingangsparameter(n) abweicht/abweichen, wobei der Simulator die Belüftungsvorrichtung (2) umfasst.

14. Medizinisch-chirurgischer Simulator nach Anspruch 13, **dadurch gekennzeichnet, dass** die Einstellung der oder des Ausgangsparameter(s) eine lineare, parabolische oder polynomiale Funktion der oder des Eingangsparameter(s) ist.

15. Medizinisch-chirurgischer Simulator nach Anspruch 13 oder 14, **dadurch gekennzeichnet, dass** der Datenverarbeitungsspeicher mehrere gespeicherte Möglichkeiten umfasst, wobei jede Möglichkeit einer der Möglichkeit spezifischen Kombination verschiedener Modelle entspricht.

16. Medizinisch-chirurgischer Simulator nach einem der Ansprüche 1 bis 15, **dadurch gekennzeichnet, dass** er die Vaskularisationsvorrichtung (1) umfasst und dadurch, dass die Vaskularisationsvorrichtung außerdem drei Leitungen (A1, A2, A3) umfasst und dadurch, dass die Verbindungsmittel der Vaskularisationsvorrichtung drei Kanülen (931, 932, 933) umfassen, welche jeweilig mit den drei Leitungen verbunden sind, wobei die Kanülen und Leitungen dazu eingerichtet sind, die Vaskularisationsvorrichtung über die Kanülen mit drei jeweiligen, ein Arteriennetz bildenden Arterien (911, 912, 913) der Leiche derart zu verbinden, sodass die Flüssigkeit über mindestens eine dieser Kanülen in das Arteriennetz injiziert werden kann.

17. Medizinisch-chirurgischer Simulator nach Anspruch 16, **dadurch gekennzeichnet, dass** die Vaskularisationsvorrichtung außerdem umfasst:
- drei Zirkulationsmechanismen (11, 12, 13), die jeweils an jeder der drei Leitungen montiert sind, wobei der jeweilige, jeder der Leitungen zugeordnete Zirkulationsmechanismus zur wahlweise Einnahme zweier Positionen eingerichtet ist:
∘ eine Injektionsposition, in welcher die Flüssigkeit in der Leitung durch den Zirkulationsmechanismus vom Flüssigkeitsinjektionssystem ausgehend in Richtung des Arteriennetzes abfließen kann und in welcher die Flüssigkeit in der Leitung durch den Zirkulationsmechanismus von dem Arteriennetz ausgehend in Richtung des Flüssigkeitsinjektionssystems nicht abfließen kann,
∘ eine Abfuhrposition, in welcher die Flüssigkeit in der Leitung durch den Zirkulationsmechanismus vom Arteriennetz ausgehend in Richtung des Flüssigkeitsinjektionssystems abfließen kann und in welcher die Flüssigkeit in der Leitung durch den Zirkulationsmechanismus von dem Flüssigkeitsinjektionssystem ausgehend in Richtung des Arteriennetzes nicht abfließen kann,
- einen Auswähler, dazu eingerichtet, mindestens zweier Modi zur Flüssigkeitsinjektion auszuwählen unter:
∘ einem Modus des Druckaufbaus, in welchem die drei Zirkulationsmechanismen in die Injektionsposition gebracht werden,
∘ einem Zirkulationsmodus, in welchem ein oder zwei der Zirkulationsmechanismen in die Injektionsposition gebracht werden und in welchem der oder die weiteren Zirkulationsmechanismen in die Abfuhrposition gebracht werden.

18. Medizinisch-chirurgischer Simulator nach einem der Ansprüche 1 bis 17, **dadurch gekennzeichnet, dass** er die Belüftungsvorrichtung (2) umfasst und dadurch, dass die Verbindungsmittel der Belüftungsvorrichtung dazu eingerichtet sind, die Belüftungsvorrichtung mit einer Luftröhre (95) der Leiche derart zu verbinden, sodass die Luftröhre zu dem Atemkreislauf gehört, und dadurch, dass das Gasinjektionssystem eine orotracheale Sonde (96) umfasst, welche dazu eingerichtet ist, das Gas in die Luftröhre zu injizieren.

19. Verfahren der medizinisch-chirurgischen Simulation, umfassend:
- einen Schritt der Vaskularisation, in welchem ein kardiovaskulärer Kreislauf durch eine Vaskularisationsvorrichtung (1) vaskularisiert wird, wobei der Schritt der Vaskularisation umfasst:
∘ einen Schritt der Verbindung, in welchem die Vaskularisationsvorrichtung durch Verbindungsmittel (931, 932, 933) mit einem Herzen (92) einer Leiche (9) derart verbunden wird, sodass das Herz zu dem kardiovaskulären Kreislauf gehört,
∘ einen Schritt der Injektion einer Flüssigkeit, in welchem eine Flüssigkeit durch ein Flüssigkeitsinjektionssystem in den kardiovaskulären Kreislauf injiziert wird,
∘ einen Schritt der Einstellung, in welchem mindestens ein Injektionsparameter der Flüssigkeit durch das Flüssigkeitsinjektionssystem eingestellt wird,
∘ vorzugsweise einen Messschritt, in welchem mindestens ein repräsentativer Parameter einer Flüssigkeitsströmung in dem kardiovaskulären Kreislauf durch ein System zur Messung von Flüssigkeit (151, 152, 153, 16) gemessen wird,
und/oder
- einen Schritt der Belüftung, in welchem ein Atemkreislauf durch eine Belüftungsvorrichtung (2) belüftet wird, wobei der Schritt der Belüftung umfasst:
∘ einen Schritt der Verbindung, in welchem die Belüftungsvorrichtung durch Verbindungsmittel (96) mit Lungen (941, 942) der Leiche (9) derart verbunden wird, sodass die Lungen zu dem Atemkreislauf gehören,
∘ einen Schritt der Injektion von Gas, in welchem ein Gas durch ein Gasinjektionssystem in den Atemkreislauf injiziert wird,
∘ einen Schritt der Einstellung, in welchem mindestens ein Injektionsparameter des Gases durch das Gasinjektionssystem eingestellt wird,
∘ vorzugsweise einen Messschritt, in welchem mindestens ein repräsentativer Parameter einer Strömung des Gases in dem Atemkreislauf durch ein System zur Messung von Gas (25) gemessen wird,
wobei das Verfahren der medizinisch-chirurgischen Simulation außerdem einen Regelungsschritt umfasst, in welchem:
- eine Regelungsvorrichtung (3) mindestens einen Eingangsparameter liest, wobei der mindestens eine Eingangsparameter umfasst:
∘ einen oder mehrere Parameter unter dem mindestens einen Parameter, der durch das Flüssigkeitsmesssystem und/oder durch das Gasmesssystem gemessen wurde, und/oder
∘ einen oder mehrere Parameter unter dem mindestens einen Injektionsparameter der Flüssigkeit und/oder dem mindestens einen Injektionsparameter des Gases,
**dadurch gekennzeichnet, dass** in dem Regelungsschritt die Regelungsvorrichtung (3) über das Flüssigkeitsinjektionssystem und/oder das Gasinjektionssystem mindestens einen Ausgangsparameter in Abhängigkeit von dem mindestens einen Eingangsparameter regelt, wobei der mindestens eine Ausgangsparameter einen oder mehrere Parameter unter dem mindestens einen Injektionsparameter der Flüssigkeit und/oder dem mindestens einen Injektionsparameter des Gases umfasst, wobei der mindestens eine Ausgangsparameter von dem mindestens einen Eingangsparameter abweicht.

## Claims

1. Medico-surgical simulator comprising:
- a vascularisation device (1) arranged to vascularise a cardiovascular circuit, the vascularisation device (1) comprising:
∘ means of connection (931, 932, 933) arranged to connect the vascularisation device (1) to a heart (92) of a cadaver (9) in such a way that the heart forms part of the cardiovascular circuit,
∘ a liquid injection system arranged to inject a liquid into the cardiovascular circuit and to set at least one injection parameter of the liquid in the cardiovascular circuit,
∘ a liquid measurement system (151, 152, 153, 16) arranged to measure at least one parameter representative of a flow of liquid in the cardiovascular circuit,
and/or
- a ventilation device (2) arranged to ventilate a respiratory circuit, the ventilation device comprising:
∘ means of connection (96) arranged to connect the ventilation device to the lungs (941, 942) of the cadaver in such a way that the lungs form part of the respiratory circuit,
∘ a gas injection system arranged to inject a gas into the respiratory circuit and to set at least one injection parameter of the gas in the respiratory circuit,
∘ a gas measurement system (25) arranged to measure at least one parameter representative of a flow of gas in the respiratory circuit,
the medico-surgical simulator further comprising a regulation device (3) arranged to:
- read at least one input parameter, the at least one input parameter comprising:
∘ one or more parameters among the at least one parameter measured by the liquid measurement system and/or by the gas measurement system, and/or
∘ one or more parameters among the at least one injection parameter of the liquid and/or the at least one injection parameter of the gas,
**characterized in that** the regulation device (3) is further arranged for setting, via the liquid injection system and/or the gas injection system, at least one output parameter according to the at least one input parameter, the at least one output parameter comprising one or more parameters among the at least one injection parameter of the liquid and/or the at least one injection parameter of the gas, the at least one output parameter being different from the at least one input parameter.

2. Medico-surgical simulator according to claim 1, **characterised in that** it comprises the vascularisation device and the ventilation device.

3. Medico-surgical simulator according to claim 1 or 2, **characterised in that** it comprises the vascularisation device (1) and **in that** the at least one injection parameter of the liquid comprises a pressure and/or flow rate and/or frequency of injection of the liquid in the cardiovascular circuit.

4. Medico-surgical simulator according to claim 3, **characterised in that** the liquid injection system comprises:
- one or more injection electrovalves (111, 121, 131) arranged to adjust the flow rate and/or injection frequency of the liquid in the cardiovascular circuit, and/or
- a liquid pressure regulator (14) arranged to adjust the injection pressure of the liquid in the cardiovascular circuit.

5. Medico-surgical simulator according to any of the claims 1 through 4, **characterised in that** it comprises the vascularisation device (1) and **in that** the at least one parameter representative of a flow of liquid in the cardiovascular circuit comprises a flow rate of the liquid in the cardiovascular circuit.

6. Medico-surgical simulator according to claim 5, **characterised in that** the liquid measurement system comprises one or more flowmeters (151, 152, 153) arranged to measure the flow rate of the liquid in the cardiovascular circuit.

7. Medico-surgical simulator according to any of the claims 1 through 6, **characterised in that** it comprises the vascularisation device (1) and **in that** the liquid measurement system further comprises an intracardiac pressure sensor (16) arranged to measure an intracardiac pressure of the liquid in the heart, said intracardiac pressure constituting a parameter representative of the flow of the liquid in the cardiovascular circuit.

8. Medico-surgical simulator according to any of the claims 1 through 7, **characterised in that** it comprises the ventilation device (2) and **in that** the at least one injection parameter of the gas comprises a pressure and/or flow rate and/or frequency of injection of the gas in the respiratory circuit.

9. Medico-surgical simulator according to claim 8, **characterised in that** the gas injection system comprises:
- a pneumatic distributor (21) arranged to adjust the flow rate and/or frequency of injection of the gas in the respiratory circuit, and/or
- a gas pressure regulator (24) arranged to adjust the injection pressure of the gas in the respiratory circuit.

10. Medico-surgical simulator according to any of the claims 1 through 9, **characterised in that** it comprises the ventilation device (2) and **in that** the at least one parameter representative of a flow of gas in the respiratory circuit comprises a flow rate of the gas in the respiratory circuit.

11. Medico-surgical simulator according to claim 10, **characterised in that** the gas measurement system comprises a pneumatic flowmeter (25) arranged to measure the flow rate of the gas in the respiratory circuit.

12. According to any of the claims 1 through 11, **characterised in that**:
- it comprises the vascularisation device (1) and **in that** the regulation device comprises means to manually input the at least one injection parameter of the liquid as an input parameter and/or
- **in that** it comprises the ventilation device (2) and the regulation device comprises means to manually input the at least one injection parameter of the gas as an input parameter.

13. Medico-surgical simulator according to any of the claims 1 through 12, **characterised in that** the regulation device comprises a computer memory (4) in which one or several of the following models are stored:
- A cardiac-respiratory model in which the regulation device reads as input parameter(s) one or more among the at least one injection parameter of the liquid and sets as output parameter(s), via the gas injection system, one or more among the at least one injection parameter of the gas according to the input parameter(s) , the simulator comprising the vascularisation device (1) and the ventilation device (2);
- A respiratory-cardiac model in which the regulation device reads as input parameter(s) one or more among the at least one injection parameter of the gas and sets as output parameter(s), via the liquid injection system, one or more among the at least one injection parameter of the liquid according to the input parameter(s), the simulator comprising the vascularisation device (1) and the ventilation device (2);
- A cardiac-cardiac model in which the regulation device reads as input parameter(s) one or more among the at least one injection parameter of the liquid and sets as output parameter(s), via the liquid injection system, one or more among the at least one injection parameter of the liquid according to the input parameter(s), the output parameter(s) being different from the input parameter(s), the simulator comprising the vascularisation device (1);
- A respiratory-respiratory model in which the regulation device reads as input parameter(s) one or more among the at least one injection parameter of the gas and sets as output parameter(s), via the gas injection system, one or more among the at least one injection parameter of the gas according to the input parameter(s), the output parameter(s) being different from the input parameter(s), the simulator comprising the ventilation device (2).

14. Medico-surgical simulator according to claim 13, **characterised in that** the setting of the output parameter(s) is a linear or parabolic or polynomial function of the input parameter(s).

15. Medico-surgical simulator according to claim 13 or 14, **characterised in that** the computer memory comprises several stored scenarios, each scenario corresponding to a combination of several models, this combination being specific to the scenario.

16. Medico-surgical simulator according to any of the claims 1 through 15, **characterised in that** it comprises the vascularisation device (1) and **in that** the vascularisation device further comprises three conduits (A1, A2, A3) and **in that** the connection means of the vascularisation device comprise three cannulae (931, 932, 933) respectively connected to said three conduits, such cannulae and conduits being arranged to connect the vascularisation device, by the cannulae, to three respective arteries (911, 912, 913) of the cadaver, forming an arterial network in such a way as to allow an injection of the liquid into the arterial network via at least one of these cannulae.

17. Medico-surgical simulator according to claim 16, **characterised in that** the vascularisation device further comprises:
- three circulation mechanisms (11, 12, 13) respectively mounted on each of the three conduits, the circulation mechanism associated with each of these conduits being arranged to selectively take two positions:
∘ an injection position in which the liquid can circulate in the conduit through the circulation mechanism from the liquid injection system to the arterial network and in which the liquid cannot circulate in the conduit through the circulation mechanism from the arterial network to the liquid injection system,
∘ an evacuation position in which the liquid can circulate in the conduit through the circulation mechanism from the arterial network to the liquid injection system and in which the liquid cannot circulate in the conduit through the circulation mechanism from the liquid injection system to the arterial network,
- a selector arranged to select at least two liquid injection modes from among:
∘ a pressurised mode in which the three circulation mechanisms are placed in the injection position,
∘ a circulation mode in which one or two of the circulation mechanisms are placed in the injection position and in which the other circulation mechanism(s) are placed in the evacuation position.

18. Medico-surgical simulator according to any of the claims 1 through 17, **characterised in that** it comprises the ventilation device (2) and **in that** the connection means of the ventilation device are arranged to connect the ventilation device to a trachea (95) of the cadaver in such a way that the trachea forms part of the respiratory circuit and **in that** the gas injection system comprises an orotracheal tube (96) to inject gas into the trachea.

19. Medico-surgical simulation method comprising:
- a vascularisation step in which a cardiovascular circuit is vascularised by a vascularisation device (1), this vascularisation step comprising:
∘ a connection step in which the vascularisation device is connected by means of connection (931, 932, 933) to a heart (92) of a cadaver (9) in such a way that the heart forms part of the cardiovascular circuit,
∘ a liquid injection step in which a liquid is injected into the cardiovascular circuit by a liquid injection system,
∘ an adjustment step in which at least one injection parameter of the liquid is set by the liquid injection system,
∘ preferably a measurement step in which at least one parameter representative of a flow of liquid in the cardiovascular circuit is measured by a liquid measurement system (151, 152, 153, 16),
and/or
- a ventilation step in which a respiratory circuit is ventilated by a ventilation device (2), this ventilation step comprising:
∘ a connection step in which the ventilation device is connected by connection means (96) to lungs (941, 942) of the cadaver (9) in such a way that the lungs form part of the respiratory circuit,
∘ a gas injection step in which a gas is injected into the respiratory circuit by a gas injection system,
∘ an adjustment step in which at least one injection parameter of the gas is set by the gas injection system,
∘ preferably a measurement step in which at least one parameter representative of a flow of the gas in the respiratory circuit is measured by a gas measurement system (25),
the medico-surgical simulation method further comprising a regulation step in which:
- a regulation device (3) reads at least one input parameter, the at least one input parameter comprising:
∘ one or more parameters among the at least one parameter measured by the liquid measurement system and/or by the gas measurement system, and/or
∘ one or more parameters among the at least one injection parameter of the liquid and/or the at least one injection parameter of the gas,
**characterized in that**, during the regulation step, the regulation device (3) sets, via the liquid injection system and/or the gas injection system, at least one output parameter according to the at least one input parameter, the at least one output parameter comprising one or more parameters among the at least one injection parameter of the liquid and/or the at least one injection parameter of the gas, the at least one output parameter being different from the at least one input parameter.
